# EUROPEAN PATENT APPLICATION

(11) **EP 4 832 419 A1**
(43) Date of publication of application: **28.10.2026**
(21) Application number: 26172725.9
(22) Date of filing: 16.04.2026
(51) Int. Cl.: H04L 9/40, G06F 21/57

(54) **NETWORK PENETRATION TESTING MEMORY REUSE**

(30) Priority: 25.04.2025 US 202519190328; 29.10.2025 US 202519373163
(71) Applicant: Horizon 3 AI, Inc., Dover, Delaware 19901 (US)
(72) Inventor: BASS, John Samuel, Dover, DE 19901 (US); SUNKAVALLY, Naveen Naga, Dover, DE 19901 (US); PILLITIERE, Anthony, Dover, DE 19901 (US); ALDERMAN, Robert George, Dover, DE 19901 (US)
(74) Representative: Patentship Patentanwaltsgesellschaft mbH

(57) **Abstract**

An autonomous pentesting agent (105) may use stored pentesting information to perform autonomous pentesting operations. The agent (105) may perform first autonomous pentesting operations during a first autonomous pentest (410-a) on a network (110). The agent (105) may obtain, during the first autonomous pentest (410-a) and based on the one or more first autonomous pentesting operations, pentest information (415-a). The agent (105) may store, at an encrypted database (405) specific to the network (110), the pentest information (415-a) obtained during the first autonomous pentest (410-a). The agent (105) may execute, after the first autonomous pentest (410-a), a second autonomous pentest (410-b) on the network (110). Executing the second autonomous pentest (410-b) may include retrieving, from the encrypted database (405) specific to the network (110), the pentest information (415-a) and performing one or more second autonomous pentesting operations. The one or more second autonomous pentesting operations may be based on the pentest information (415-a) associated with the first autonomous pentest (410-a) retrieved from the encrypted database (405) specific to the network (110).

## Description

### BACKGROUND

In networking, penetration testing or "pentesting" refers to conducting security operations that simulate a cybersecurity attack in order to identify vulnerabilities in a network. The goal of pentesting is to mimic the actions of a malicious actor and discover loopholes or other vulnerabilities before they can be exploited. Pentesting may include techniques such as scanning for vulnerabilities, testing system configurations and security protocols, and attempting controlled attacks to evaluate defense mechanisms within a network. Network administrators can remediate vulnerabilities uncovered during pentesting to prevent malicious actors from compromising network security using those vulnerabilities. Practicing regular pentesting can aid in maintaining high security standards, protecting sensitive data, and ensuring the continuity of network services.

### SUMMARY

The described techniques relate to improved methods, systems, devices, and apparatuses that support network penetration testing memory reuse.

In some aspects, the techniques described herein relate to a method of autonomous pentesting, including: performing one or more first autonomous pentesting operations during a first autonomous pentest on a network including a plurality of network assets; obtaining, during the first autonomous pentest and based at least in part on the one or more first autonomous pentesting operations, pentest information associated with the first autonomous pentest on the network; storing, at an encrypted database specific to the network, the pentest information obtained during the first autonomous pentest, wherein the pentest information includes an indication of the one or more first autonomous pentesting operations, attack path information associated with the first autonomous pentest, asset information associated with the plurality of network assets, attribute data associated with a network asset of the plurality of network assets, or any combination thereof; and executing, after the first autonomous pentest, a second autonomous pentest on the network, wherein executing the second autonomous pentest includes: retrieving, from the encrypted database specific to the network, the pentest information associated with the first autonomous pentest; and performing one or more second autonomous pentesting operations, wherein the one or more second autonomous pentesting operations are based at least in part on the pentest information associated with the first autonomous pentest retrieved from the encrypted database specific to the network.

In some aspects, the techniques described herein relate to an apparatus for autonomous pentesting, including: one or more memories storing processor-executable code; and one or more processors coupled with the one or more memories and individually or collectively operable to execute the code to cause the apparatus to: perform one or more first autonomous pentesting operations during a first autonomous pentest on a network including a plurality of network assets; obtain, during the first autonomous pentest and based at least in part on the one or more first autonomous pentesting operations, pentest information associated with the first autonomous pentest on the network; store, at an encrypted database specific to the network, the pentest information obtained during the first autonomous pentest, wherein the pentest information includes an indication of the one or more first autonomous pentesting operations, attack path information associated with the first autonomous pentest, asset information associated with the plurality of network assets, attribute data associated with a network asset of the plurality of network assets, or any combination thereof; and execute, after the first autonomous pentest, a second autonomous pentest on the network, wherein, to execute the second autonomous pentest, the one or more processors are individually or collectively further operable to execute the code to cause the apparatus to: retrieve, from the encrypted database specific to the network, the pentest information associated with the first autonomous pentest; and perform one or more second autonomous pentesting operations, wherein the one or more second autonomous pentesting operations are based at least in part on the pentest information associated with the first autonomous pentest retrieved from the encrypted database specific to the network.

In some aspects, the techniques described herein relate to a non-transitory computer-readable medium storing code for autonomous pentesting, the code including instructions executable by one or more processors to: perform one or more first autonomous pentesting operations during a first autonomous pentest on a network including a plurality of network assets; obtain, during the first autonomous pentest and based at least in part on the one or more first autonomous pentesting operations, pentest information associated with the first autonomous pentest on the network; store, at an encrypted database specific to the network, the pentest information obtained during the first autonomous pentest, wherein the pentest information includes an indication of the one or more first autonomous pentesting operations, attack path information associated with the first autonomous pentest, asset information associated with the plurality of network assets, attribute data associated with a network asset of the plurality of network assets, or any combination thereof; and execute, after the first autonomous pentest, a second autonomous pentest on the network, wherein, to execute the second autonomous pentest, the instructions are further executable by the one or more processors to: retrieve, from the encrypted database specific to the network, the pentest information associated with the first autonomous pentest; and perform one or more second autonomous pentesting operations, wherein the one or more second autonomous pentesting operations are based at least in part on the pentest information associated with the first autonomous pentest retrieved from the encrypted database specific to the network.

In some aspects, the techniques described herein relate to a method of pentesting, including: performing one or more first pentesting operations during a first pentest on a network, wherein the one or more first pentesting operations are performed along an attack path between one or more first network assets of a plurality of network assets of the network; storing, at an encrypted database specific to the network, attack path information corresponding to the attack path of the first pentest, wherein the attack path information includes an indication of the one or more first pentesting operations, the one or more first network assets of the plurality of network assets, or both; retrieving seed data from the encrypted database specific to the network, the seed data including at least a portion of the attack path information; and initiating, after the first pentest, a second pentest on the network, wherein an initial pentesting operation of the second pentest is in accordance with the seed data.

In some aspects, the techniques described herein relate to an apparatus for autonomous pentesting, including: one or more memories storing processor-executable code; and one or more processors coupled with the one or more memories and individually or collectively operable to execute the code to cause the apparatus to: perform one or more first pentesting operations during a first pentest on a network, wherein the one or more first pentesting operations are performed along an attack path between one or more first network assets of a plurality of network assets of the network; store, at an encrypted database specific to the network, attack path information corresponding to the attack path of the first pentest, wherein the attack path information includes an indication of the one or more first pentesting operations, the one or more first network assets of the plurality of network assets, or both; retrieve seed data from the encrypted database specific to the network, the seed data including at least a portion of the attack path information; and initiate, after the first pentest, a second pentest on the network, wherein an initial pentesting operation of the second pentest is in accordance with the seed data.

In some aspects, the techniques described herein relate to a non-transitory computer-readable medium storing code for autonomous pentesting, the code including instructions executable by one or more processors to: perform one or more first pentesting operations during a first pentest on a network, wherein the one or more first pentesting operations are performed along an attack path between one or more first network assets of a plurality of network assets of the network; store, at an encrypted database specific to the network, attack path information corresponding to the attack path of the first pentest, wherein the attack path information includes an indication of the one or more first pentesting operations, the one or more first network assets of the plurality of network assets, or both; retrieve seed data from the encrypted database specific to the network, the seed data including at least a portion of the attack path information; and initiate, after the first pentest, a second pentest on the network, wherein an initial pentesting operation of the second pentest is in accordance with the seed data.

### BRIEF DESCRIPTION OF THE DRAWINGS

FIG. 1 shows an example of a computing environment that supports network penetration testing memory reuse in accordance with aspects of the present disclosure.
FIG. 2 shows an example of an autonomous pentest map that supports network penetration testing memory reuse in accordance with aspects of the present disclosure.
FIGs. 3 and 4 show examples of computing environments that support network penetration testing memory reuse in accordance with aspects of the present disclosure.
FIG. 5 shows an example of a pentesting flow diagram that supports network penetration testing memory reuse in accordance with aspects of the present disclosure.
FIG. 6 shows an example of a computing environment that supports network pentesting memory reuse in accordance with aspects of the present disclosure.
FIG. 7 shows a diagram of a system including a device that supports network penetration testing memory reuse in accordance with aspects of the present disclosure.
FIGs. 8 and 9 show flowcharts illustrating methods that support network penetration testing memory reuse in accordance with aspects of the present disclosure.

### DETAILED DESCRIPTION

A pentesting service may execute a pentest of a network involving sequences of pentesting operations and various network assets. For example, the pentesting service may execute pentesting operations, including gathering information about the network and assets within the network, identifying potential vulnerabilities based on the information, and attempting to compromise network assets through those potential vulnerabilities. The pentest may span a relatively long period of time-in some cases, multiple weeks-during which the pentesting service may gather information and perform iterative compromise attempts. Subsequent pentests of the network may also span multiple weeks, as the pentesting service may begin each pentest without knowledge of previous pentest(s). For example, the pentesting service may refrain from retaining data from previous pentests of the network due to data security and privacy policies associated with the network. Because the pentesting service may not use information from previous pentests, the service may perform repetitive tasks-including data gathering and compromise attempts-across pentests. Additionally, the pentesting service may fail to identify patterns across pentests if pentest data is not retained, thereby limiting a security assessment of the network generated based on the pentest. That is, the pentesting service may not identify and the network may not address patterns in subdomains, credentials, and host configurations that persist across pentests. Accordingly, to execute pentests more efficiently and perform more comprehensive security assessments of the network, the pentesting service described herein may securely store and use historical pentest data in subsequent pentests.

For example, an autonomous pentesting agent may securely store and reuse discovered pentest data to inform subsequent pentests. The autonomous pentesting agent may provision a distinct, encrypted database to store pentesting information for each network. In other words, the autonomous pentesting agent may store pentest information from one or more autonomous pentests of the network in an encrypted database specific to that network. The autonomous pentesting agent may retrieve the pentest information from the encrypted database during a subsequent pentest of the network. For example, the autonomous pentesting agent may identify a network asset that was compromised using a credential obtained during a prior pentest. Accordingly, the autonomous pentesting agent may retrieve the credential from the encrypted database and use the credential to compromise the network asset during the subsequent pentest. In other words, the autonomous pentesting agent may perform subsequent pentesting operations based on pentest information retrieved from the encrypted database. By securely storing and reusing pentest information, the autonomous pentesting agent may perform more efficient and comprehensive pentests compared to a pentest that does not utilize stored pentest information.

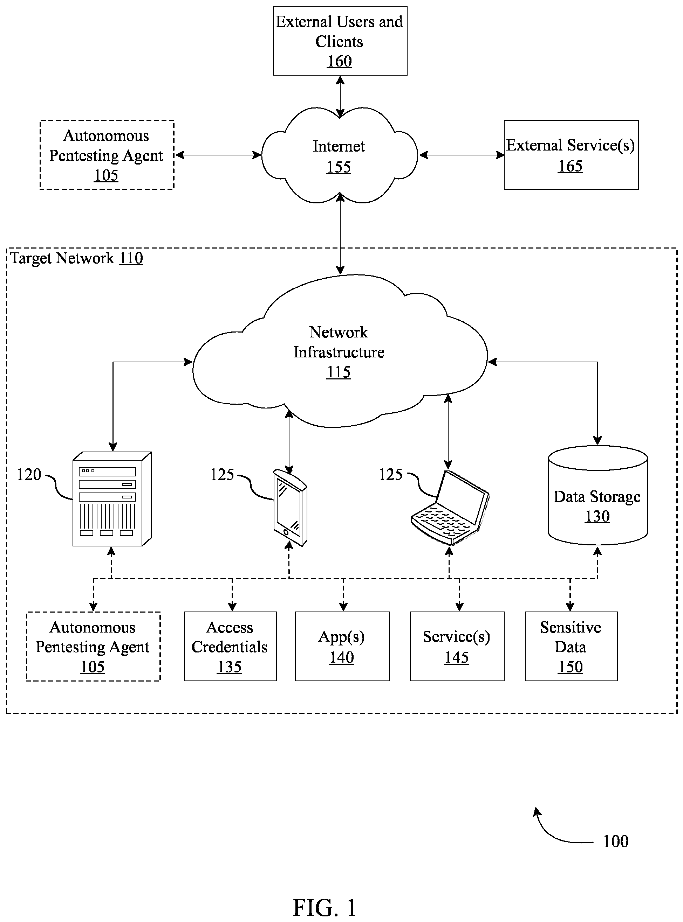

**FIG. 1** illustrates an example of a computing environment 100 that supports network penetration testing memory reuse in accordance with aspects of the present disclosure. The computing environment 100 may include an autonomous pentesting agent 105 that performs an autonomous pentest of a target network 110. The target network 110 may include one or more devices or systems, such as a network infrastructure 115, server 120, computing devices 125, data storage 130, or any combination thereof. The devices or systems of the target network 110 may be configured to access or provide various network information and services, such as access credentials 135, app(s) 140, service(s) 145, sensitive data 150, or any combination thereof.

The target network 110 may allow the server 120, the computing devices 125, and the data storage 130 to communicate (e.g., exchange information) with one another. For example, the network infrastructure 115 may include any quantity of communications links and any quantity of hubs, bridges, routers, switches, ports, or other physical or logical network components that support communication between the server 120, computing devices 125, and data storage 130 of the target network 110 as well as communication between the target network 110 (e.g., the private network) and the Internet 155 or other external network (outside the target network 110, beyond a firewall associated with the target network 110, etc.). The target network 110 may include aspects of one or more wired networks, one or more wireless networks (e.g., cellular networks, Wi-Fi networks), or any combination thereof. The target network 110 may include aspects of one or more public networks or private networks, as well as secured or unsecured networks, or any combination thereof. For example, the target network 110 may be an example of a private network that includes one or more public-facing or external assets that are accessible via the Internet 155. As an example, the Internet 155 may refer to the world wide web, and users (e.g., external users and clients 160), may access the target network 110 via the Internet 155 through a website or application that is accessible or available via the Internet 155. For instance, the external users and clients 160, the external service(s) 165, or both may access network information and services via the Internet 155, including the access credentials 135, app(s) 140, service(s) 145, and sensitive data 150.

The target network 110 may be, or may be part of, a domain, such as a private domain associated with an organization, company, client, business, etc., defining an administrative boundary of the target network 110. The domain may include components such as computing devices 125, the server 120, etc., along with associated users (e.g., access credentials 135) and service(s) 145 that are governed or configured by one or more domain controllers and operate in accordance with policies that are put in place and managed by the one or more domain controllers. The domain may be divided into multiple subdomains or groups containing respective subsets of components, users (e.g., access credentials 135), and service(s) 145 that operate in accordance with a respective policy (e.g., group policy).

The target network 110 may be accessible via one or more hosts. For example, hosts may be examples of real or virtual machines that are connected to and capable of accessing the target network 110. Real machines may refer to machines having or made up of hardware components including a central processing unit (CPU), memory, hard drive, or the like, such as physical or tangible computers or servers (e.g., the server 120, the computing devices 125, etc.). Virtual machines may refer to software within or running on a physical computer or server using portions of the CPU, memory, hard drive, or the like of the physical computer or server. A physical computer or server may include or support multiple virtual machines, such as multiple tenants (e.g., in a multi-tenant environment). The server 120 and the computing devices 125 may be examples of hosts. Hosts may communicate data with other devices within the target network 110 and outside of the network (e.g., with devices accessible via the Internet 155). For example, the server 120 may send data to and receive data from one or more of the computing devices 125. Additionally, or alternatively, hosts may access resources of the target network 110, including the access credentials 135, app(s) 140, service(s) 145, or sensitive data 150. As used herein, hosts may refer to web hosts, cloud hosts, virtual hosts, remote hosts, or the like.

Hosts may be examples of and include network assets. For example, a host may be an example of a type of network asset that has access to other network assets, such as applications, services, and resources. As used herein, network assets refer to data, devices, or components of the target network 110, including data, software, and hardware. In some examples, network assets may refer to machines that include network shares. For example, network assets may be examples of machines (e.g., real or virtual machines) that include shares of the target network 110, such as file sharing systems. Network assets may be obtained and utilized by attackers to compromise the target network 110. In some cases, network assets may refer to network entities (e.g., system hosts or machines) that have internet protocol (IP) addresses and may be discovered during scans. The server 120, the computing devices 125 (e.g., laptops, desktops, mobile devices, smart vehicles, wearables), the data storage 130, and the access credentials 135, app(s) 140, service(s) 145, cookies, encryption and decryption keys, tokens, and sensitive data 150 accessible via the devices and systems of the target network 110 may all be examples of network assets. Other examples of network assets include virtual machines, printers, Internet-of-Things (IoT) devices, switches, routers, access points, endpoints, public static IPs, Lambdas and serverless architectures, Amazon Web Service (AWS) containers, and Kubernetes pods and other containerized applications. For example, physical devices (e.g., servers, computing devices, data storage) and systems may be considered network assets as well as information, apps, and services accessible through physical devices and systems of the target network 110.

Hosts may store, provide, or implement access credentials 135, app(s) 140, service(s) 145, sensitive data 150, or any combination thereof. In some cases, computing devices 125 on the network may access the one or more network assets (access credentials 135, app(s) 140, service(s) 145, sensitive data 150, etc.) via the server 120 (e.g., via a host). Additionally, or alternatively, computing devices 125 may locally store or otherwise access one or more network assets of the target network 110. For example, users of the target network 110 may access app(s) 140 and service(s) 145 via the computing devices 125 directly or indirectly (e.g., via a connection between the computing devices 125 and the server 120).

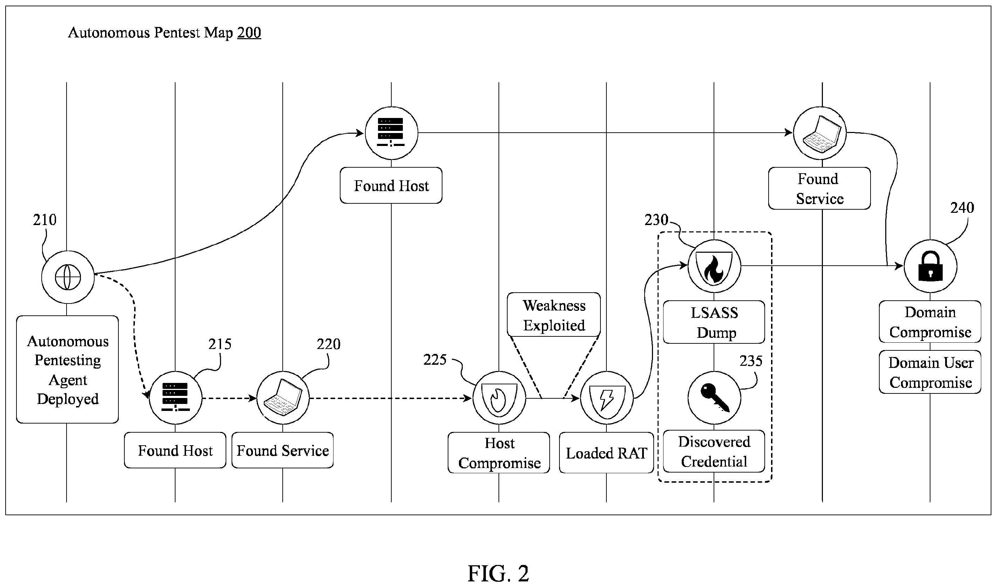

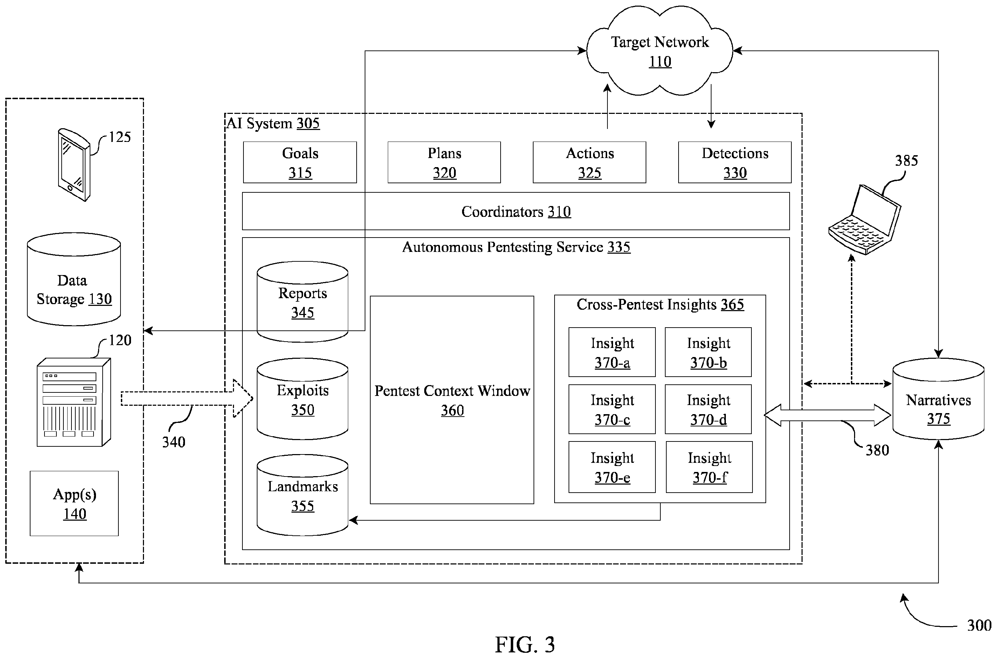

The autonomous pentesting agent 105 may perform a pentest of the target network 110. As used herein, a penetration test or a "pentest" may refer to the performance of one or more security operations that simulate a cybersecurity attack in order to identify vulnerabilities in the target network 110. The autonomous pentesting agent 105 may perform the pentest of the target network 110 using one or more artificial intelligence (AI) models. For example, the autonomous pentesting agent 105 may be "autonomous" in that the autonomous pentesting agent 105 may perform the pentest without hard-coding (e.g., deterministic coding), user inputs, or the like and, instead, by using the one or more AI models. The autonomous pentesting agent 105 may identify, via the pentest, security vulnerabilities of the target network 110. An example of an output of the pentest may be described in greater detail elsewhere herein, including with reference to FIGs. 2 and 3.

The autonomous pentesting agent 105 may, via the one or more AI models, determine and implement an attack path for a pentest. For example, the autonomous pentesting agent 105 may identify or select an asset of the target network 110 to attempt to access initially and, from that asset, another asset to attempt to access, and so on. In other words, the autonomous pentesting agent 105 may use the one or more AI models to generate (e.g., output) decisions or operations that mimic those of a potential cyber attacker. The one or more AI models may output a targeted asset of the target network 110 to be subject to an access attempt by the autonomous pentesting agent 105 based on inputs and relevant context of various assets in the target network 110. For instance, the one or more AI models may output targeted assets based on the relative position of assets within the target network 110, asset types, downstream assets (e.g., accessible after or through accessing a targeted asset), or the like.

The one or more AI models may be trained using data of previous pentests of the target network 110 or other networks. For example, an autonomous pentesting service that deploys the autonomous pentesting agent 105 may train one or more AI models used by the autonomous pentesting agent 105 using tactics, techniques, and procedures (TTPs) of attackers (e.g., human or automated pentests), autonomous pentests performed on the target network 110 previously, on other networks, or both. The autonomous pentesting agent 105 may perform improved pentests after the one or more AI models are trained using previous pentests of the target network 110. That is, as the autonomous pentesting agent 105 learns more about the target network 110, the autonomous pentesting agent 105 may perform pentests with higher performance levels (higher accuracy, higher quantities of potential attack paths, etc.).

In some cases, the pentest may be initiated internal (e.g., within) or external to (e.g., outside of a firewall) the target network 110. For example, the autonomous pentesting agent 105 may be deployed at a host device of the target network 110 (e.g., deployed to the server 120 or computing devices 125). In such cases, the autonomous pentesting agent 105 may perform the pentest as an internal user of the target network 110. Such internal pentests may be indicative of or emulate internal security threats to the network, such as from employees of an organization or an attacker that has otherwise access to the target network 110 internally or to a user of the target network 110. Alternatively, the autonomous pentesting agent 105 may be deployed at the Internet 155. For example, the autonomous pentesting agent 105 may perform the pentest as an external user of the target network 110, such as by accessing external or public-facing assets of the target network 110 on the Internet 155. In some examples, the autonomous pentesting agent 105 may be deployed via a runner. For example, a runner may be an executable process, script, or sequence, that enables automated deployment of a container (e.g., a Docker container). A container may refer to an executable package of software including code, runtime, system tools, system libraries, settings, and other components to run an application. The runner and the container may allow a user to provision and deploy pentests from a portal without manually running a launch script for the autonomous pentesting agent 105 (such as in accordance with a pentest schedule).

By performing the pentest autonomously via the autonomous pentesting agent 105, techniques described herein may support improved performance related to speed, identification of security vulnerabilities, and provision of remediation measures. For example, the pentest, when performed autonomously using the autonomous pentesting agent 105, may support improved performance and, by extension, improved security of the target network 110 against cybersecurity attacks relative to hard-coded (e.g., deterministic) or manual (e.g., human operated) pentests.

As described herein, the autonomous pentesting agent 105 may securely store and reuse pentest information across subsequent pentests. For example, the autonomous pentesting agent 105 may execute a first autonomous pentest on the target network 110 and obtain, through the first autonomous pentest, pentest information. The autonomous pentesting agent 105 may store the pentest information in an encrypted database specific to the network. After the first autonomous pentest, the autonomous pentesting agent 105 may execute a second autonomous pentest. During the second autonomous pentest, the autonomous pentesting agent 105 may retrieve the pentest information from the encrypted database and perform pentesting operations based on the pentest information. That is, the autonomous pentesting agent 105 may use the pentest information to determine and/or perform one or more operations during the second autonomous pentest.

The autonomous pentesting agent 105 may support improved efficiency in discovering vulnerabilities, reduced duplication of pentesting operations, and improved detection of persistent security vulnerabilities by storing and reusing pentest information. As an example, the autonomous pentesting agent 105 may reuse previously successful pentest operations (e.g., attack paths) rather than iteratively attempting to compromise a network asset during a subsequent pentest. Accordingly, the autonomous pentesting agent 105 may compromise the network asset more quickly and use fewer computing resources during the subsequent pentest.

Additionally, the autonomous pentesting agent 105 may identify patterns in vulnerabilities across pentests based on stored pentest information. For example, the autonomous pentesting agent 105 may identify whether remediation operations in the target network 110 addressed a vulnerability identified during an initial pentest, specifically for remediation operations related to subdomains, credentials, and host configurations. As an example, the autonomous pentesting agent 105 may identify patterns in subdomain naming conventions, passwords (e.g., changing a password to include the current month and/or year), administrator usernames (e.g., "first.last.admin"), or the like based on the stored pentest information. As another example, the autonomous pentesting agent 105 may compromise one or more credentials during a first pentest and verify whether the one or more credentials were rotated or updated by attempting to use the one or more credentials in a second, subsequent pentest. For instance, if found in the first pentest, the autonomous pentesting agent 105 may re-test the one or more credentials in a second pentest to determine whether the credentials are still functional. If the credentials are non-functional, the autonomous pentesting agent 105 may mark the credentials as invalid (e.g., in the encrypted database) and report that the credentials were successfully rotated.

The autonomous pentesting agent 105 may support secure storage of pentest information. For example, the autonomous pentesting agent 105 may provide an encrypted database specific to the target network 110 such that the database is inaccessible to, and does not mistakenly store pentest information of, other networks pentested by the autonomous pentesting agent 105. In some examples, the autonomous pentesting agent 105 may obtain a key used to decrypt the database during a subsequent pentest, and the key may be usable for the duration of the pentest. In other words, a service managing the key may dynamically grant access to the key to prevent persistent and/or unauthorized access to the encrypted database.

**FIG. 2** shows an example of an autonomous pentest map 200 that supports network penetration testing memory reuse in accordance with aspects of the present disclosure. The autonomous pentest map 200 may be an example of an output or result of an autonomous pentest performed by an autonomous pentesting agent, such as a pentest performed by the autonomous pentesting agent 105 in the target network 110 as described with reference to FIG. 1. The autonomous pentest map 200 may illustrate and describe an example of events of a pentest, including operations performed by and information obtained by the autonomous pentesting agent. The autonomous pentest map 200 in the example of FIG. 2 may illustrate a map after completion of a pentest, but in some examples, the autonomous pentesting service may display and update the autonomous pentest map 200 during a pentest as events occur. For example, the autonomous pentesting service may display a real-time view that provides real-time information and updates on the progress of a currently running pentest, including status updates for injected credentials.

The autonomous pentest map 200 may include one or more types of events. In some examples, the autonomous pentest map 200 may illustrate notable events, which may be events that did or would likely (e.g., in a real-time view) lead to a critical impact. For example, the autonomous pentest map 200 may include deployment 210 (e.g., of the autonomous pentesting agent), host identification 215, service identification 220, host compromise 225, deployment of an attacker tool 230 (e.g., a remote access tool (RAT), credential identification 235, and access 240 (e.g., to a domain, a domain user, or both). An attacker tool 230, such as a RAT, may refer to software that enables full control of a tech device remotely. RATs may have legitimate uses, such as technical support, but may also be controlled by attackers with malicious intent. In the context of the autonomous pentesting agent, a RAT may be used to provide the autonomous pentesting agent with additional access to further explore attack paths during operations.

The autonomous pentest map 200 includes one possible attack path including two attack branches that is generated based on an autonomous pentest. However, it is understood that any quantity of possible attack paths having any quantity of possible attack branches may be output from an autonomous pentest. In other words, the autonomous pentest map 200 may include one or more attack paths having one or more respective attack branches. In some cases, dozens, hundreds, or thousands of possible attack paths, branches, or both may be generated based on the autonomous pentest. Additionally, it is understood that while the autonomous pentest map 200 shown in FIG. 2 displays one example of an autonomous pentest for illustration, other maps including various different events, hosts, attack paths, and attack branches may result from various autonomous pentests.

In the example of the autonomous pentest map 200, the autonomous pentesting agent may identify an attack path having two attack branches. As used herein, attack "path" may be understood to refer to a series of events, set in motion by the autonomous pentest agent, that lead to a compromise of one or more components or assets of a network. In other words, an attack path may refer to the sequence of steps or actions an attacker or autonomous pentesting agent 105 may take to compromise a system or network. An attack path may involve identifying vulnerabilities and other weaknesses, exploiting them, and navigating through the target network 110 to access valuable information or resources. Additionally, "branches" or "chains" of an attack path may refer to one or more events occurring simultaneously or in parallel that lead to the compromise. As an example, in a first attack branch of the autonomous pentest map 200, the autonomous pentesting agent may identify a host, identify a service, and compromise the host (e.g., through the service). On the compromised host, the autonomous pentesting agent may exploit a weakness identified on the service running on the host to load a RAT and remotely control the compromised host. The autonomous pentesting agent may perform, via the RAT, a Local Security Authority Subsystem Service (LSASS) dump, allowing the autonomous pentesting agent to discover a credential. The autonomous pentesting agent may use the credential in a different branch of the attack path. For example, in a second attack branch of the autonomous pentest map 200, the autonomous pentesting agent may identify a host and, through the identified host, a service. The autonomous pentesting agent may use the discovered credentials (e.g., of the first attack branch) at the service (e.g., of the second attack branch to obtain access 240 to the domain, domain user, or both.

As used herein, a weakness may refer to a vulnerability or security flaw that may be exploited by an attacker to compromise a system or network. Weaknesses may include misconfigurations, outdated software, default credentials, or other vulnerabilities that may be leveraged to gain unauthorized access or perform malicious actions. Some vulnerabilities may be publicly known. For example, an N-day may be a software or hardware vulnerability that is already publicly known, (e.g., n days since disclosure, where n is a positive integer) but there may or may not be a security update available to remediate the vulnerability. Weaknesses, if exploited, may be associated with impacts. An impact may summarize, in business terms, the effects the autonomous pentesting agent was able to achieve as a result of exploiting weaknesses in an environment. An example of an impact may be a sensitive data exposure, which may indicate that the autonomous pentesting agent was able to potentially access sensitive information given the filetype or service that is compromised (e.g., business documents in file shares, Outlook personal storage table (PST) files, confluence remote code execution (RCE), exchange RCE, etc.).

An autonomous pentesting service may display the autonomous pentest map 200 such that compromised assets may be identified and security measures may be put in place. In some cases, the autonomous pentesting service may provide mitigation recommendations according to the autonomous pentest map 200. As an example, the autonomous pentest map 200 may identify a particular host or service as a security vulnerability for a network by tracing the access 240 backwards to a host identification 215 event. Accordingly, the autonomous pentesting service may provide a mitigation recommendation to be applied to the host involved in the host identification 215 event, such as according to how the host was identified or how access was obtained to the host at the host compromise 225 event. Similarly, the autonomous pentesting service may provide a mitigation recommendation to be applied to the service involved in the service identification 220 event.

The autonomous pentesting service may securely store and reuse pentest information across subsequent pentests. For example, the autonomous pentesting service may execute a first autonomous pentest on a target network and obtain, through the first autonomous pentest, pentest information. In the example of FIG. 2, the pentest information may include the discovered credential from the credential identification 235. The autonomous pentesting service may store the pentest information in an encrypted database specific to the target network. After the first autonomous pentest, the autonomous pentesting service may execute a second autonomous pentest on the target network. During the second autonomous pentest, the autonomous pentesting service may retrieve the pentest information from the encrypted database and perform pentesting operations based on the pentest information. For example, after identifying the service that the discovered credential may be used to access, the autonomous pentesting service may retrieve the credential from the encrypted database rather than executing pentesting operations to identify the credential in the target network (e.g., rather than executing pentesting operations along the bottom branch of the attack path illustrated with reference to FIG. 2).

**FIG. 3** shows an example of a computing environment 300 that supports network penetration testing memory reuse in accordance with aspects of the present disclosure. The computing environment 300 may implement or be implemented by the computing environment 100, the autonomous pentest map 200, or both. For example, the computing environment 300 may include servers 120, computing devices 125, and app(s) 140 utilizing an AI system 305 to perform autonomous pentests.

In some examples, the AI system 305 may be a system designed to process data, learn from past experiences, and make determinations and predictions that mimic human cognitive functions (e.g., from the perspective of a potential cyber attacker). In some cases, the AI system 305 may implement or be implemented by one or more AI or machine learning (ML) models (e.g., AI/ML models). In some examples, an AI/ML model of the AI system 305 may be a supervised learning model configured to learn from labeled training data to generate predictions on inputs. In some other examples, an AI/ML model of the AI system 305 may be an unsupervised learning model that is configured to discover patterns in unlabeled data to generate predictions on inputs. In another example, the AI system 305 may implement reinforcement learning models that are configured to learn behaviors through trial- and-error (e.g., via experimentation). Additionally, or alternatively, the AI system 305 may implement neural networks (e.g., artificial neural networks (ANNs)) that include one or more layers configured to process information via a series of mathematical transformations.

Deep learning models may be a subset of neural networks designed and configured for tasks such as computer vision and natural language processing and may be used by the AI system 305. In some examples, the AI system 305 may utilize a large language model (LLM) which utilizes a neural network architecture to process, understand, and generate natural language. For example, LLMs may be trained on a relatively large corpus of data (e.g., text data, image data, audio data, video data, among others) to perform natural language processing tasks such as text generation, translation, summarization, responding to natural language queries, data generation, or any combination thereof.

The AI system 305 may be an agentic AI system, meaning that the AI system 305 may act autonomously (e.g., through the use of AI agents), at least for some operations, to achieve specified goals, make decisions, and take actions without direct human intervention. In some cases, the AI system 305 may be an agentic AI system with limited human involvement where the AI system 305 may request human guidance or user input only in certain circumstances, such as if the AI system 305 is unable to make a decision or perform a subsequent operation. Further, the AI system 305 may use one or more AI/ML models to set and pursue goals 315 without those goals 315 being specifically defined by human input to the AI system 305. The AI system 305 may further generate plans 320 and execute sequences of actions 325 to achieve those goals 315 and adapt future behavior in accordance with real-time observations and feedback about the effectiveness of the actions 325 to achieve the desired outcomes or meet targets.

For example, in some cases, utilizing one or more AI/ML models, the AI system 305 may include an autonomous pentesting service 335 and may interface with one or more coordinators 310 that coordinate goals 315 and plans 320, actions 325, and detections 330 for achieving the goals 315. For example, for autonomous pentesting, the goals 315 of the AI system 305 may be to obtain access to data stored within a target network 110, compromise (such as by obtaining unauthorized access or deploying unauthorized software to) a domain or a network asset of the target network 110, or any combination thereof. To obtain the goals 315, the AI system 305 may generate one or more plans 320 that are based on actions 325 and detections 330. For example, to determine a next action within a defined set of guardrails or instructions, the AI system 305 may generate a plan 320 that can include an action 325 to invoke (e.g., execute) one or more commands on a target network 110 to obtain a detection 330 from the target network 110.

In some examples, the target network 110 may include one or more network assets such as servers 120, computing devices 125, data storages 130, app(s) 140, or any combination thereof. Further, obtaining a detection 330 from the target network 110 may include the AI system 305 retrieving telemetry data from the one or more network assets of the target network 110. In some cases, telemetry data obtained from the target network 110 may include logs, traces, metrics, events, or any combination thereof from the one or more network assets of the target network 110. For example, a detection 330 may include some data that is obtained from the target network 110 via an autonomous pentest that aids the AI system 305 in achieving the goals 315. In one example, the detection 330 may include an autonomous pentest obtaining a credential that is used to gain unauthorized access to a network asset, which may be an example of one of the goals 315. In another example, a detection 330 may be the autonomous pentest detecting a set of patterns of events indicated within logs of the target network 110, which may be utilized for achieving a respective goal 315. For example, a goal 315 may be to perform a successful credential compromise attack to gain unauthorized access to a network asset and a detection 330 may indicate information to aid an autonomous pentesting agent in performing the credential compromise attack.

In some examples, the AI system 305 may also interface with the coordinators 310 to perform autonomous pentests as described elsewhere herein, such as with reference to FIGs. 1 and 2. When performing autonomous pentests, the AI system 305 may collect and store a relatively large quantity (such as thousands, millions, billions, or trillions) of training data points or tokens for the AI system 305 to perform subsequent autonomous pentests. For example, each action 325 (e.g., command) executed via the AI system 305 may result in a collection of a relatively large quantity of training data points that indicate whether the action 325 succeeded or failed, why the action 325 succeeded or failed, which software, policies, or tools were used to execute the action 325 that resulted in the action 325 succeeding or failing, or any combination thereof. Therefore, the AI system 305 may continuously obtain and update the training data used for training AI/ML models and perform reinforcement learning using collective intelligence to improve the weights and training of the AI/ML models.

In some examples, the training data for the AI system 305 may include telemetry data obtained from the target network 110, data obtained from servers 120, computing devices 125, and app(s) 140 via a developer pipeline 340, or both. In some cases, the training data may include indications of reports 345, exploits 350, and landmarks 355. A report 345 may indicate outputs or artifacts generated by the AI system 305 to document the discoveries, vulnerabilities, and results of an autonomous pentest. An exploit 350 may indicate the tools, techniques, operations, programs, code, and the like utilized by the AI system 305 to perform an autonomous pentest. A landmark 355 may indicate a point or marker within a network (e.g., the target network 110) to assist the AI system 305 to navigate and map an environment of the target network 110 during an autonomous pentest.

In some examples, the AI system 305 may obtain the reports 345, exploits 350, and landmarks 355 based on performing one or more autonomous pentests. In another example, one or more users (e.g., developers) may manually generate the reports 345, exploits 350, and landmarks 355 for training the AI system 305. In such cases, the one or more users may generate the data for the reports 345, exploits 350, and landmarks 355 and label the data for the AI system 305. Additionally, or alternatively, one or more users may utilize an LLM to generate the reports 345, exploits 350, and landmarks 355. For example, a user may prompt an LLM to generate the reports 345, exploits 350, and landmarks 355 by providing the LLM with a set of input parameters that indicate a scope, objectives, and constraints of an autonomous pentest. In some examples, the LLM prompt to generate the reports 345, exploits 350, and landmarks 355 may be a natural language prompt that includes instructions that indicates characteristics of the target network 110, testing protocols, compliance requirements, or any combination thereof. The LLM may then process the prompt and generate the reports 345, exploits 350, and landmarks 355 for training the AI system 305.

Utilizing the reports 345, exploits 350, and landmarks 355, the AI system 305 may perform one or more autonomous pentests by maintaining awareness of the current testing state and progress through a pentest context window 360. The pentest context window 360 may process information about ongoing pentesting operations, including successfully exploited vulnerabilities, accessed systems and data, attempted but failed exploit paths, attack paths, among others.

The AI system 305 may analyze contextual information obtained from performing autonomous pentests to generate cross-pentest insights 365 that can be applied across multiple pentesting operations. For example, as a result of training the AI system 305, one or more autonomous pentests, or both, the AI system 305 may generate a set of cross-pentest insights 365 that indicates one or more insights 370 (e.g., an insight 370-a, an insight 370-b, an insight 370-c, an insight 370-d, an insight 370-e, and an insight 370-f). For example, the insight 370-a may indicate patterns of vulnerable default configurations in software (e.g., commonly used enterprise or commercial software). In some other examples, the insight 370-b may indicate how compromised low-privilege user credentials can be leveraged to eventually gain domain admin access through privilege escalation techniques. Further, the insight 370-c and the insight 370-d may indicate common pathways where initial network access can lead to sensitive data exposure, such as finding unencrypted password files or accessing improperly secured cloud storage buckets. The insight 370-e may indicate recurring vulnerabilities in network segmentation that allow lateral movement between supposedly isolated systems. Additionally, or alternatively, the insight 370-f may indicate patterns where seemingly low-risk misconfigurations can be chained together to achieve relatively significant compromise of the target network 110. Therefore, the cross-pentest insights 365 may indicate one or more insights 370 that represent patterns and vulnerabilities that occur across different networks and testing scenarios, helping organizations better understand systemic security weaknesses and how to address such weaknesses. For example, the cross-pentest insights 365 may be added as landmarks 355 for further training the AI system 305 to perform autonomous pentests.

The cross-pentest insights 365 may be displayed to one or more computing devices 125, app(s) 140, or both to enable users to view and analyze the cross-pentest insights 365 to generate additional TTPs configured to achieve the goals 315 of the AI system 305. To display the cross-pentest insights 365 to one or more users, the AI system 305 may generate one or more narratives 375 that indicate the insights 370 obtained in response to one or more autonomous pentests. In some examples, to generate the one or more narratives 375, the AI system 305 may output (e.g., transmit) the cross-pentest insights 365 via a pipeline 380 connected to a separate AI/ML model (e.g., an LLM). For example, the AI system 305 may output the cross-pentest insights 365 to an LLM that is configured to generate the narratives 375 (e.g., the LLM is finetuned for text generation based on an input of the insights 370). In some cases, the narratives 375 may indicate detailed security postures for organizations, companies, tenants, users, groups of users, or any combination thereof. For example, a narrative 375 may be a compliance narrative that indicates one or more insights 370 about the security compliance of a target network 110. In another example, a narrative 375 may be a presentation for a company or organization that indicates the one or more vulnerabilities in a target network 110 associated with the company or organization. For example, the presentation can indicate the cross-pentest insights 365 obtained from performing one or more autonomous pentests on the target network 110 associated with the company or organization (e.g., the target network 110).

In some examples, users or devices external to the target network 110 may interact, communicate, or otherwise engage with the AI system 305 to configure pentesting parameters, perform pentesting operations on the target network 110, or analyze the results from a pentest on target network 110. For instance, a user such as a service provider for the AI system 305 may operate an external device 385 to provide information to the AI system 305 (e.g., to the coordinators 310), which identifies goals 315, plans 320, or actions 325 for pentesting the target network 110. Additionally, or alternatively, the AI system 305 may provide information, such as cross-pentest insights 365, to the external device 385. A user of the external device 385 may analyze the cross-pentest insights 365 to generate or modify narratives 375 corresponding to the results of the pentest on the target network 110. In some cases, an output of the LLM used to generate narratives 375 may be sent to the external device 385, and a user (e.g., a service provider) of the external device 385 may aggregate narratives 375 about the target network 110 for reporting or conveyance via the pentest context window 360. Alternatively, the user of the external device 385 may modify one or more narratives 375 based on goals 315, plans 320, detections 330, or other information such that the narratives 375 resulting from the pentest for the target network indicate the relevant and important information for identifying weaknesses and addressing vulnerabilities in the target network 110.

An autonomous pentesting service 335 may utilize the AI system 305 to identify patterns in stored pentest information. For example, the AI system 305 may identify patterns related to subdomains, credentials, and host configurations. As an example, the AI system 305 may identify patterns in subdomain naming conventions, passwords (e.g., changing a password to include the current month and/or year), administrator usernames (e.g., "first.last.admin"), or the like based on the stored pentest information. In some examples, the AI system 305 may use one or more LLMs to identify the patterns. The one or more LLMs may be fine-tuned on pentesting datasets or trained using historical network telemetry data. The one or more LLMs may apply natural language processing techniques to recognize naming conventions, password structures, or configuration patterns from structured and unstructured sources, such as log files or domain registries.

For example, the one or more LLMs may detect a pattern of incrementing password suffixes (e.g., from "2024" to "2025"). Accordingly, during a subsequent pentest, the autonomous pentesting service 335 may use a password incremented from a previously identified password. Additionally, the one or more LLMs of the AI system 305 may identify patterns in host names and configurations, which the autonomous pentesting service 335 may use to perform a scan in a subsequent pentest.

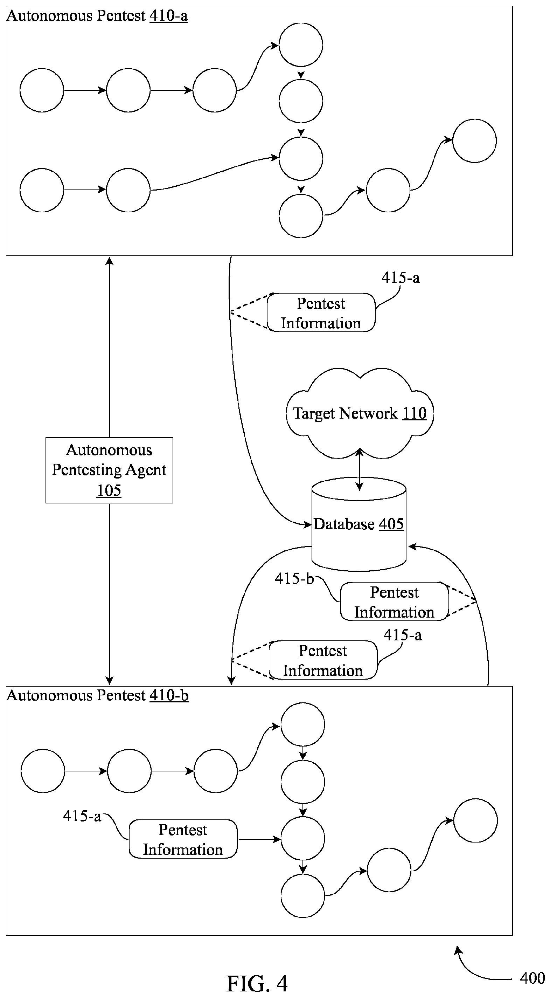

**FIG. 4** shows an example of a computing environment 400 that supports network penetration testing memory reuse in accordance with aspects of the present disclosure. The computing environment 400 may implement or be implemented by the computing environment 100, the autonomous pentest map 200, the computing environment 300, or any combination thereof. For example, the computing environment 400 may illustrate multiple autonomous pentests by an autonomous pentesting agent 105 on a target network 110.

The autonomous pentesting agent 105 may execute an autonomous pentest 410-a on a target network 110. For example, the autonomous pentesting agent 105 may perform one or more first autonomous pentesting operations along one or more attack paths. An example of an attack path of the autonomous pentest 410-a is shown with reference to FIG. 4. The autonomous pentesting agent 105, according to the attack path, may identify network assets of the target network 110, identify vulnerabilities of the network assets, deploy attacker tools (e.g., deploying a RAT, performing an LSASS dump, etc.), and achieve compromise event(s). During the autonomous pentest 410-a, the autonomous pentesting agent 105 may obtain pentest information 415-a. For example, the autonomous pentesting agent 105 may obtain information about the presence and characteristics of network assets within the target network 110, vulnerabilities of those network assets, exploits that were successful for those vulnerabilities, asset information and/or attribute data associated with the network assets, or the like. In other words, the autonomous pentesting agent 105 may obtain information about assets within the target network 110 and operations that may be performed to achieve compromise with respect to those assets.

The autonomous pentesting agent 105 may store the pentest information 415-a obtained during the autonomous pentest 410-a in a database 405. The database 405 may be encrypted and specific to the target network 110. For example, the autonomous pentesting agent 105 may provision the database 405 based on an input indicating that storage of pentest information associated with the target network 110 is authorized. The database 405 may be independent (e.g., isolated, siloed, etc.) from data stores of other networks. In other words, the autonomous pentesting agent 105 may provision databases that store pentest data on a per-network basis, which may prevent cross-contamination of pentest information among different networks. The database 405 may store pentest information associated with pentests on the target network 110. That is, the database 405 may store the pentest information 415-a associated with the autonomous pentest 410-a on the target network 110, as well as pentest information associated with any autonomous pentests on the target network 110 prior to the autonomous pentest 410-a (if applicable).

In some examples, the autonomous pentesting agent 105 may store the pentest information 415-a at the database 405 according to a data retention policy associated with the target network 110. For example, the autonomous pentesting agent 105 may scrub or anonymize sensitive information from the pentest information 415-a (e.g., medical records, personally identifiable information (PII), etc.) prior to storing the pentest information 415-a in the database 405. Additionally, or alternatively, the database 405 may store the pentest information 415-a within encrypted tables. In other words, the pentest information 415-a (or a portion thereof) stored in the database 405 may be encrypted in multiple layers, including an encryption of the database 405 itself and/or an encryption of information within the database 405. Encrypting the tables within the database 405 may provide an additional layer of security (e.g., in addition to encrypting the database 405). Data within table(s) of the database 405 may be encrypted via one or more plugins (e.g., Postgres or Neo plugins) and/or via different keys than a key used to encrypt the database 405. That is, the database 405 may be encrypted via a first key, and one or more tables within the database may be encrypted via one or more second keys.

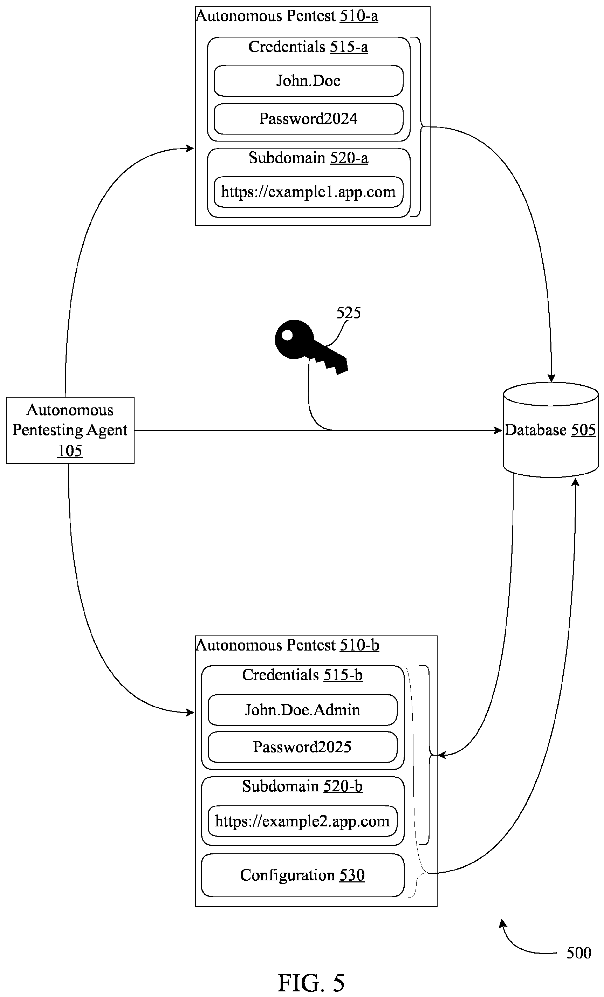

After the autonomous pentest 410-a, the autonomous pentesting agent 105 may execute an autonomous pentest 410-b on the target network 110. During the autonomous pentest 410-b, the autonomous pentesting agent 105 may use the pentest information 415-a associated with the autonomous pentest 410-a. For example, the autonomous pentesting agent 105 may retrieve the pentest information 415-a associated with the autonomous pentest 410-a from the database 405 specific to the target network 110 and may perform operations during the autonomous pentest 410-b that are based on the pentest information 415-a. In other words, the autonomous pentesting agent 105 may reuse discovered data from the autonomous pentest 410-a to inform the autonomous pentest 410-b. For example, when a new pentest (e.g., the autonomous pentest 410-b) begins for the target network 110, the autonomous pentesting agent 105 may access the database 405 associated with the target network 110 to retrieve prior discoveries relevant to the IP ranges, subdomains, or known configurations of the target network 110. If matching targets (e.g., network assets) reappear in the new pentest, the autonomous pentesting agent 105 may attempt to use or perform previously successful exploits. For example, prior discoveries may be used to pre-populate scanning targets, avoid redundant reconnaissance steps, or execute exploit modules with high confidence based on observations from earlier pentests. An example of reuse of pentest information may be described in greater detail with reference to FIG. 5.

In some examples, the autonomous pentesting agent 105 may perform a scan (e.g., using Nmap) of the target network 110 prior to using the pentest information 415-a associated with the autonomous pentest 410-a. For example, the autonomous pentesting agent 105 may perform baseline scan(s), which may detect new or changed network assets within the target network 110. By performing the scan prior to using the pentest information 415-a, the autonomous pentesting agent 105 may prevent the autonomous pentest 410-a from being biased towards the same vulnerabilities identified and exploits used during the autonomous pentest 410-a. That is, the autonomous pentesting agent 105 may identify new or updated network assets through the scan, assess whether the new or updated network assets are associated with vulnerabilities, and develop exploits targeting the new or changed assets. Attempted exploits targeting the new or changed assets may be in addition to reusing the pentest information 415-a to target network assets that were also identified during the autonomous pentest 410-a.

The autonomous pentesting agent 105 may decrypt the pentest information 415-a stored in the database 405 using a key. For example, the autonomous pentesting agent 105 may obtain a key used to encrypt the database 405 from a key management service (e.g., a cloud-based key management service, such as Amazon Web Service (AWS) Key Management Service (KMS)). The key management service may manage access to one or more keys associated with the database 405. In some examples, the key management service may dynamically grant the autonomous pentesting agent 105 access to a key associated with the database 405 during the autonomous pentest 410-b. That is, the key management service may revoke access to the key, or the key may expire, when the autonomous pentest 410-b is terminated. In some examples, the key may be programmatically rotated via a policy-based control mechanism, such as time-to-live (TTL) expiration or conditional access logic tied to session state. Rotating the key may prevent key reuse beyond the authorized pentest window.

In examples in which the database 405 includes multi-layer encryption (e.g., encrypted tables), the autonomous pentesting agent 105 may use multiple keys to obtain the pentest information 415-a. That is, the autonomous pentesting agent 105 may obtain the pentest information 415-a (or a portion thereof) stored within the database 405 by obtaining a first key, using the first key to decrypt the database 405, obtaining one or more second keys, and using the one or more second keys to decrypt the pentest information 415-a (e.g., decrypt one or more tables).

In some examples, the autonomous pentesting agent 105 may identify patterns across multiple pentests of the target network 110 based on stored pentest information. For example, the autonomous pentesting agent 105 may identify one or more patterns based on pentest information 415-a associated with the autonomous pentest 410-a and pentest information 415-b associated with the autonomous pentest 410-b. In some examples, the autonomous pentesting agent 105 may use one or more LLMs to identify the patterns, such as via the AI system 305 described with reference to FIG. 3. Examples of pattern identification and use of the identified patterns in pentests may be described in greater detail elsewhere herein, including with reference to FIG. 5.

**FIG. 5** shows an example of a pentesting flow diagram 500 that supports network penetration testing memory reuse in accordance with aspects of the present disclosure. The pentesting flow diagram 500 may implement or be implemented by the computing environment 100, the autonomous pentest map 200, the computing environment 300, the computing environment 400, or any combination thereof. For example, the pentesting flow diagram 500 may illustrate an example of the use of pentesting data stored at a database 505 by an autonomous pentesting agent 105 across pentests.

The autonomous pentesting agent 105 may execute an autonomous pentest 510-a on a target network. During the autonomous pentest 510-a, the autonomous pentesting agent 105 may identify credentials 515-a (e.g., a username "John.Doe" and a password "Password 2024"). Additionally, the autonomous pentesting agent 105 may identify a subdomain 520-a (e.g., "https://example1.app.com"). The autonomous pentesting agent 105 may store the credentials 515-a and the subdomain 520-a in a database 505. That is, the autonomous pentesting agent 105 may store pentest information associated with the autonomous pentest 510-a-including the credentials 515-a and subdomain 520-a identified during the pentest-in the database 505. The database 505 may be an example of a database specific to the target network subject to the autonomous pentest 510-a. That is, the database 505 may be an example of the database 405 as described with reference to FIG. 4.

After the autonomous pentest 510-a, the autonomous pentesting agent 105 may perform an autonomous pentest 510-b on the target network. During the autonomous pentest 510-b, the autonomous pentesting agent 105 may retrieve pentest information from the database 505 using a key 525. For example, the autonomous pentesting agent 105 may obtain the key 525 from a key management service. The autonomous pentesting agent 105 may use the key 525 to decrypt the pentest information stored in the database 505.

Before using the pentest information retrieved from the database 505, the autonomous pentesting agent 105 may scan the target network. For example, the autonomous pentesting agent 105 may scan the target network and identify network assets present in the network. The autonomous pentesting agent 105 may identify information that was not previously identified during the autonomous pentest 510-a and/or stored in the database 505. For example, the autonomous pentesting agent 105 may identify a configuration 530 of the target network. Accordingly, the autonomous pentesting agent 105 may identify vulnerabilities of the configuration 530 and attempt to exploit the configuration 530 (e.g., without using the stored pentest information from the database 505). By using newly identified information during the autonomous pentest 510-b, the autonomous pentesting agent 105 may ensure that the autonomous pentest 510-b identifies weaknesses and vulnerabilities that are at least partially different from those identified via the autonomous pentest 510-a.

Additionally, the autonomous pentesting agent 105 may identify network assets that were previously identified and compromised during the autonomous pentest 510-a through the scan. In such examples, the autonomous pentesting agent 105 may use the pentest information associated with the autonomous pentest 510-a during the autonomous pentest 510-b to target the network asset that was previously identified and compromised.

For example, the autonomous pentesting agent 105 may identify a service that was compromised using the credentials 515-a. Accordingly, the autonomous pentesting agent 105 may attempt to use the credentials 515-a to access the service. If the access attempt fails, the autonomous pentesting agent 105 may modify the username and/or password of the credentials 515-a in another access attempt. In other words, the autonomous pentesting agent 105 may attempt to use the credentials 515-a and, if the credentials 515-a are unsuccessful, attempt to use a variation of the username and/or password. For example, the autonomous pentesting agent 105 may use heuristic rules or LLM-inferred logic (e.g., date substitution, keyword appending, leetspeak transformations) to generate credential variations, increasing the likelihood of successful access in follow-up attempts.

By attempting the variation of the username and/or password, the autonomous pentesting agent 105 may identify a pattern across the pentests. For example, the autonomous pentesting agent 105 may identify an incremental change in a password between the autonomous pentest 510-a and the autonomous pentest 510-b (e.g., a change from "2024" to "2025" in the password). Additionally, or alternatively, the autonomous pentesting agent 105 may identify patterns in a username scheme associated with administrative privileges (e.g., "John.Doe.Admin"). For example, the autonomous pentesting agent 105 may attempt to add ".Admin" to a username of the previously identified credentials 515-a and discover the credentials 515-b (e.g., corresponding administrator credentials). In such examples, the autonomous pentesting agent 105 may use the identified credential pattern to compromise users (e.g., attempt a password having an incremental change from the stored password(s)), enumerate user accounts having administrative privileges (e.g., by testing "first.last.admin" for each user), or both. The autonomous pentesting agent 105 may identify and use patterns for autonomous pentesting operations via one or more LLMs, such as LLMs of the AI system 305 described with reference to FIG. 3.

Additionally, or alternatively, the autonomous pentesting agent 105 may identify patterns in subdomains and/or hostnames used by the target network 110 (e.g., "app-develop.example.com"). For example, the autonomous pentesting agent 105 may identify a subdomain 520-b (e.g., "https://example2.app.com") having a same naming structure as the subdomain 520-a. The autonomous pentesting agent 105 (e.g., via one or more LLMs) may identify the pattern in the naming structure. The autonomous pentesting agent 105 may enumerate a list of hostnames for the target network using one or more wordlists (e.g., stored or generated via the one or more LLMs) within the pattern of subdomains. That is, the autonomous pentesting agent 105 may enumerate subdomains by inserting different words from the one or more wordlists within the identified naming structure for the subdomains. In some examples, the autonomous pentesting agent 105 may use the enumerated list of subdomains and/or the identified naming structure to perform targeted scans during pentesting.

In some examples, the autonomous pentesting agent 105 may transmit notifications to a user associated with the target network based on identifying persistence of a weakness across pentests. For example, after the autonomous pentest 510-a, the autonomous pentesting agent 105 may recommend that a user change the password of the credentials 515-a (e.g., because the credentials 515-a were compromised). However, during the autonomous pentest 510-b, the autonomous pentesting agent 105 may identify that the user merely changed a suffix of the password from "2024" to "2025." That is, the autonomous pentesting agent 105 may identify that the user did not address the vulnerability of the password, as an attacker is likely to attempt the variation. Accordingly, the autonomous pentesting agent 105 may flag the vulnerability to the credentials 515-a and recommend a change that prevents subsequent compromise to the password. In some examples, the autonomous pentesting agent 105 may alert a user associated with the network of the vulnerability during the autonomous pentest 510-b (e.g., immediately after identifying the vulnerability) or after the autonomous pentest 510-b.

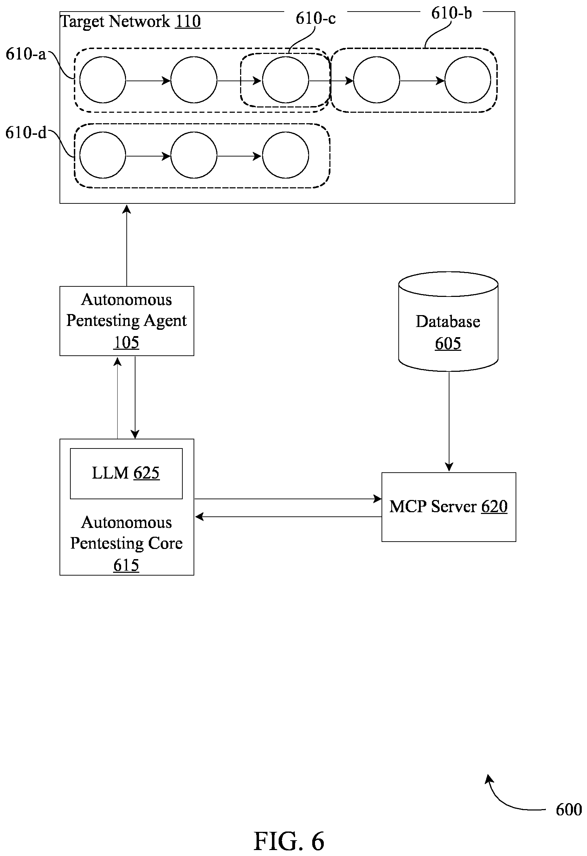

**FIG. 6** shows an example of a computing environment 600 that supports network pentesting memory reuse in accordance with aspects of the present disclosure. The computing environment 600 may implement or be implemented by the computing environment 100, the autonomous pentest map 200, the computing environment 300, the computing environment 400, the pentesting flow diagram 500, or any combination thereof. For example, the computing environment 600 may illustrate multiple autonomous pentests by an autonomous pentesting agent 105 on a target network 110.

The autonomous pentesting agent 105 may perform a pentest 610-a (e.g., a first or initial pentest) on the target network 110. During the pentest 610-a, the autonomous pentesting agent 105 may perform one or more first pentesting operations along an attack path between one or more first network assets of the target network 110. The one or more first pentesting operations may include identifying network assets within the target network 110, discovering security vulnerabilities in those network assets, exploiting the discovered vulnerabilities, deploying attacker tools, obtaining credentials, achieving unauthorized access to network assets, or the like.

An attack path may refer to a sequence of pentesting operations by which the autonomous pentesting agent 105 traverses between network assets in the target network 110, where compromise of one network asset provides access or information that enables compromise of subsequent network assets along the path. For example, the attack path may begin with identification and exploitation of a first network asset (e.g., a web server), proceed to deployment of an attacker tool and discovery of credentials on the compromised first network asset, and progress to use of the discovered credentials to compromise a second network asset (e.g., a domain controller or database).

An autonomous pentesting core 615 may control and manage pentesting operations performed by the autonomous pentesting agent 105. For example, the autonomous pentesting core 615 may generate and transmit commands to the autonomous pentesting agent 105 to initiate pentesting operations, specify targets for pentesting operations, configure parameters of pentesting operations, or any combination thereof. The autonomous pentesting agent 105 may execute the commands received from the autonomous pentesting core 615 and report results back to the autonomous pentesting core 615. For example, the autonomous pentesting agent 105 may provide telemetry data, operation results, discovered information, or any combination thereof back to the autonomous pentesting core 615. Based on the information received from the autonomous pentesting agent 105, the autonomous pentesting core 615 may determine subsequent pentesting operations and transmit corresponding commands to continue the pentest.

The autonomous pentesting core 615 may store, at a database 605, attack path information corresponding to the attack path of the pentest 610-a. The database 605 may be encrypted and specific to the target network 110. For example, the autonomous pentesting core 615 may provision the database 605 based on authorization to store pentest information associated with the target network 110. The database 605 may be isolated from databases associated with other networks such that pentest information from different networks is not cross-contaminated. In some examples, the database 605 may be a graph database, such as a Neptune database, or an object-relational database, such as a PostgreSQL database. The database 605 may support querying (e.g., via GraphQL or other query languages) to enable retrieval of stored attack path information.

The autonomous pentesting core 615 may perform an extract, transform, load (ETL) process to store the attack path information in the database 605. For example, the autonomous pentesting core 615 may extract pentest data generated during the pentest 610-a from one or more temporary data stores, in-memory structures, or ephemeral databases used during execution of the pentest 610-a (e.g., used by the autonomous pentesting agent 105). The autonomous pentesting core 615 may transform the extracted pentest data into a format suitable for storage in the database 605. For example, the transformation may include structuring the pentest data as graph nodes and edges for storage in a graph database, formatting the pentest data as relational records for storage in a Postgres database, or both, while the transformation may include anonymizing or scrubbing sensitive information from the pentest data according to a data retention policy associated with the target network 110.

In some examples, the ETL process may be performed in real-time during the pentest 610-a such that attack path information is stored in the database 605 as pentesting operations are completed. Alternatively, the ETL process may be performed after completion of the pentest 610-a (e.g., as a post-pentest operation) to batch-process and store the attack path information. Real-time ETL may enable concurrent pentests to access and utilize attack path information as it is generated, while post-pentest ETL may reduce computational overhead during active pentesting operations.

The attack path information stored in the database 605 may include an indication of the one or more first pentesting operations performed during the pentest 610-a, an indication of the one or more first network assets involved in the attack path, or both. For example, the attack path information may include identifiers of network assets that were discovered, scanned, or compromised during the pentest 610-a. The attack path information may include descriptions or identifiers of pentesting operations that were performed, such as types of scans executed, vulnerabilities exploited, credentials obtained, or attacker tools deployed. Additionally, the attack path information may include relationships between network assets, such as which network assets provided access to which other network assets along the attack path.

The database 605 may store the attack path information in a format that enables efficient retrieval and analysis during subsequent pentests. In examples where the database 605 is a graph database, the attack path information may be stored as nodes representing network assets and edges representing pentesting operations or relationships between network assets, where each node may include attributes describing characteristics of the corresponding network asset and each edge may include attributes describing the pentesting operation that established the relationship. In examples where the database 605 includes a Postgres database, the attack path information may be stored in relational tables that can be queried to reconstruct attack paths or identify patterns across multiple pentests.

Prior to or during a subsequent pentest, the autonomous pentesting agent 105 may retrieve seed data from the database 605. The seed data may include at least a portion of the attack path information stored in the database 605 from the pentest 610-a or from other previous pentests on the target network 110. For example, the seed data may include information about previously discovered network assets, previously identified vulnerabilities, previously successful pentesting operations, previously obtained credentials, or previously compromised hosts.

The autonomous pentesting core 615 may retrieve the seed data from the database 605 using an MCP server 620. The MCP server 620 may provide an interface between an LLM 625 of the autonomous pentesting core 615 and the database 605. For example, the MCP server 620 may execute queries to retrieve attack path information from the database 605 in response to requests from the LLM 625 of the autonomous pentesting core 615. In some examples, the MCP server 620 may support GraphQL queries that return attack vectors, attack paths, or other pentest information stored in the database 605. The autonomous pentesting core 615 may query the database 605 via the MCP server 620 to retrieve seed data relevant to the subsequent pentest. For example, the autonomous pentesting core 615 may query for attack paths associated with specific network assets, credentials, IP ranges, subdomains, or other characteristics of the target network 110. The MCP server 620 may retrieve the requested seed data from the database 605 and provide the seed data to the autonomous pentesting core 615.

After the pentest 610-a, the autonomous pentesting agent 105 may execute one or more subsequent pentests on the target network 110, such as a pentest 610-b, a pentest 610-c, a pentest 610-d, or any combination thereof. For example, the autonomous pentesting agent 105 may initiate a second pentest on the target network 110, where an initial pentesting operation of the second pentest is in accordance with the seed data retrieved from the database 605. The second pentest may be a continuation of an attack path from the pentest 610-a, a verification of a previously identified security vulnerability, or an application of previously successful pentesting operations to similar network assets.

The second pentest may be a pentest 610-b that continues the attack path from the pentest 610-a. For example, the autonomous pentesting agent 105 may retrieve seed data from the database 605 indicating a last network asset compromised during the pentest 610-a and the state of compromise achieved at that network asset. An initial pentesting operation of the pentest 610-b may include performing one or more second pentesting operations from the last network asset identified in the seed data. For example, if the pentest 610-a terminated after compromising a host and obtaining credentials on that host, the pentest 610-b may begin by using those credentials to attempt lateral movement to additional network assets. Accordingly, the pentest 610-b may be a continuation of the attack path of the pentest 610-a, extending the attack path discovered during the pentest 610-a to explore additional network assets or achieve additional levels of compromise. By continuing from the last network asset of the pentest 610-a, the pentest 610-b may avoid duplicating reconnaissance and initial compromise operations already performed during the pentest 610-a, thereby improving efficiency of the pentesting process.

In some examples, the second pentest may be a pentest 610-c that verifies whether a security vulnerability identified during the pentest 610-a remains present in the target network 110. For example, the autonomous pentesting agent 105 may retrieve seed data from the database 605 indicating a network asset that was compromised during the pentest 610-a and a pentesting operation that successfully exploited a security vulnerability of that network asset. An initial pentesting operation of the pentest 610-c may include performing at least one pentesting operation of the one or more first pentesting operations from the pentest 610-a, where the at least one pentesting operation targets the security vulnerability of the network asset. For example, if the pentest 610-a successfully exploited a misconfiguration on a web server, the pentest 610-c may attempt to exploit the same misconfiguration on the same web server to verify whether the misconfiguration has been remediated.

If the pentesting operation succeeds during the pentest 610-c, the autonomous pentesting agent 105 may verify that the security vulnerability remains present at the network asset. Alternatively, if the pentesting operation fails during the pentest 610-c (e.g., the autonomous pentesting agent 105 fails to gain unauthorized access to the network asset via the at least one pentesting operation), the autonomous pentesting agent 105 may determine that the security vulnerability has been remediated. The autonomous pentesting agent 105 may update the database 605 to remove or modify the at least one pentesting operation from the attack path information, such as by marking the pentesting operation as no longer valid or reducing a success score associated with the pentesting operation. In this manner, the pentest 610-c may provide verification of remediation efforts and maintain accuracy of the attack path information stored in the database 605.

In some examples, the second pentest may be a pentest 610-d that applies pentesting operations from the pentest 610-a to similar network assets discovered during the pentest 610-d. The pentest 610-d may be independent of the attack path discovered during the pentest 610-a but may leverage knowledge gained from the pentest 610-a to more efficiently compromise similar network assets.

For example, the autonomous pentesting agent 105 may identify a second network asset during the pentest 610-d and determine a similarity score between a first network asset compromised during the pentest 610-a and the second network asset. The similarity score may be based on one or more first attributes of the first network asset and one or more second attributes of the second network asset. The attributes may include characteristics such as operating system type and version, installed software and versions, network services running, host configurations, naming conventions, subdomain structures, or any combination thereof. For example, the similarity score may be higher when the first network asset and the second network asset have matching or similar operating systems, similar installed software, or similar configurations.

Based on the similarity score, the autonomous pentesting agent 105 may retrieve attack path information from the database 605 related to the first network asset and perform pentesting operations on the second network asset in accordance with the attack path information. For example, the autonomous pentesting core 615 may query the database 605 via the MCP server 620 (e.g., via the LLM 625) using the one or more second attributes of the second network asset. The query may request attack path information associated with network assets having attributes similar to the one or more second attributes. A response to the query may indicate the first network asset and at least one pentesting operation that successfully compromised the first network asset during the pentest 610-a.

The pentest 610-d may include performing the at least one pentesting operation on the second network asset. For example, if the first network asset was compromised via an exploit, the autonomous pentesting agent 105 may attempt the same exploit on the second network asset. The autonomous pentesting agent 105 may prioritize attempting pentesting operations that were successful on similar network assets, as indicated by the similarity score, before attempting other pentesting operations. In this manner, the pentest 610-d may use historical knowledge about what pentesting operations are likely to succeed against network assets based on their attributes, improving the efficiency and success rate of the pentest 610-d.

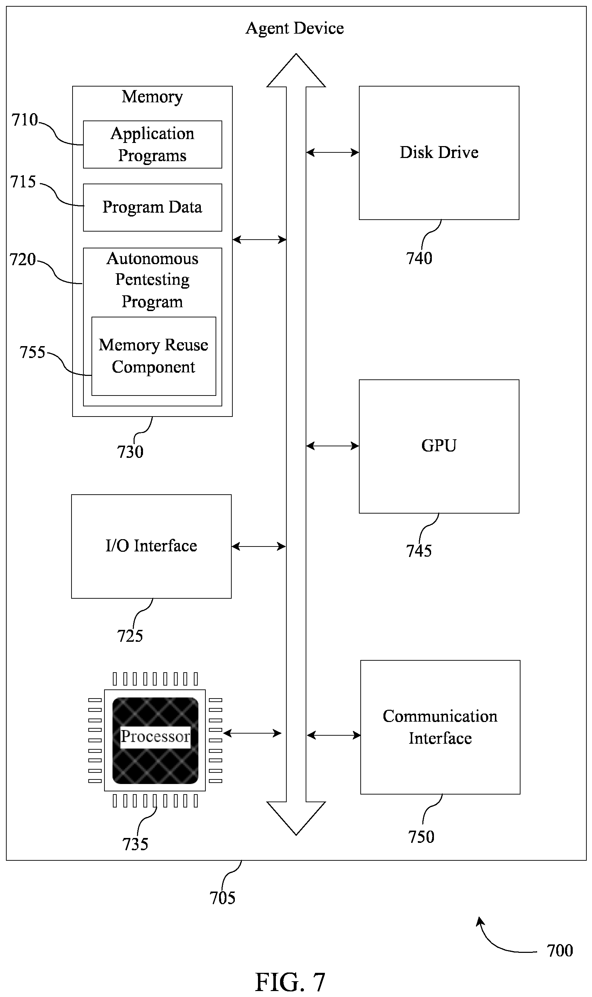

**FIG. 7** shows a diagram of a system 700 including an agent device 705 that supports network penetration testing memory reuse in accordance with aspects of the present disclosure. The agent device 705 may be an example of a device or server on which an autonomous pentesting agent 105 is deployed as described herein. The agent device 705 may include components for network penetration testing memory reuse, such as a memory 730 including application programs 710, program data 715, an autonomous pentesting program 720, and a memory reuse component 755; an input/output (I/O) interface 725; a processor 735; a disk drive 740; a graphics processing unit (GPU) 745; and a communication interface 750. Each of these components may communicate, directly or indirectly, with one another (e.g., via one or more buses, communications links, communications interfaces, or any combination thereof).

The I/O interface 725 may support connection of the agent device 705 with one or more other devices. For example, the agent device 705 may connect to keyboards, mice, printers, hard disks, or the like via the I/O interface 725. The I/O interface 725 may communicate with the processor 735. That is, the processor 735 may process signals from devices connected to the agent device 705 via the I/O interface 725.

Memory 730 may include RAM, ROM, or both. The memory 730 may store computer-readable, computer-executable software including instructions that, when executed, cause at least one processor 735 to perform various functions described herein, such as functions supporting network penetration testing memory reuse. In some cases, the memory 730 may contain, among other things, a basic input/output system (BIOS), which may control basic hardware or software operation such as the interaction with peripheral components or devices. The memory 730 may be an example of a single memory or multiple memories. For example, the agent device 705 may include one or more memories 730.

The application programs 710 in the memory 730 may be examples of app(s) 140 as described with reference to FIG. 1. For example, the application programs 710 may be installed on the memory 730 of the agent device 705, among other devices in a network. The application programs 710 may be examples of software applications or computer programs that are implemented to carry out one or more functions or tasks.

The program data 715 may be data related to the application programs 710. Program data 715 may be an example of or refer to running data of programs and applications installed on the memory 730 of the agent device 705. In some examples, the program data 715 may include various data, including code that allows the application programs 710 to perform the one or more functions or tasks.

The processor 735 may include an intelligent hardware device, (e.g., a general-purpose processor, a digital signal processor (DSP), a CPU, a microcontroller, an application-specific integrated circuit (ASIC), a field programmable gate array (FPGA), a programmable logic device, a discrete gate or transistor logic component, a discrete hardware component, or any combination thereof). The processor 735 may be configured to execute computer-readable instructions stored in at least one memory 730 to perform various functions (e.g., functions or tasks supporting network penetration testing memory reuse). Though a single processor 735 is depicted in the example of FIG. 7, it is to be understood that the system 700 may include any quantity of one or more of processors 735 and that a group of processors 735 may collectively perform one or more functions ascribed herein to a processor, such as the processor 735. The processor 735 may be an example of a single processor or multiple processors. For example, the agent device 705 may include one or more processors 735.

The disk drive 740 may be configured to store data that is generated, processed, stored, or otherwise used by the system 700. In some cases, the disk drive 740 may include one or more hard disk drives (HDDs), one or more solid-state drives (SSDs), or both. In some examples, the disk drive 740 may be an example of a single database, a distributed database, multiple distributed databases, a data store, a data lake, or an emergency backup database. In some examples, the disk drive 740 may be an example of one or more components described with reference to FIG. 1.

GPU 745 may be configured to store graphics-related data. The GPU 745 may store and manage data related to graphics and video processing. In some examples, the GPU 745 may be an example of or a component of a graphics card. The GPU 745 may use components of the memory 730, including the RAM, for temporary storage. For example, the GPU 745 may move data from the RAM of the memory 730 to the GPU 745 for graphics and video processing.

The communication interface 750 may enable the agent device 705 to exchange information (e.g., input information, output information, or both) with other systems or devices (not shown). For example, the communication interface 750 may enable the agent device 705 to connect to a network (e.g., a target network 110 as described herein). The communication interface 750 may include one or more wireless network interfaces, one or more wired network interfaces, or any combination thereof.

The autonomous pentesting program 720 may be an example of a program of an autonomous pentesting service that is installed on the memory 730 of the agent device 705. The autonomous pentesting program 720 may execute an autonomous pentest of a network accessed by the agent device 705, such as accessed via the communication interface 750. That is, the autonomous pentesting program 720 may be configured to perform an autonomous pentest as described herein, including an autonomous pentest involving autonomous pentesting.

The memory reuse component 755 may support autonomous pentesting in accordance with examples as disclosed herein. For example, the memory reuse component 755 may be configured as or otherwise support a means for performing one or more first autonomous pentesting operations during a first autonomous pentest on a network including a set of multiple network assets. The memory reuse component 755 may be configured as or otherwise support a means for obtaining, during the first autonomous pentest and based on the one or more first autonomous pentesting operations, pentest information associated with the first autonomous pentest on the network. The memory reuse component 755 may be configured as or otherwise support a means for storing, at an encrypted database specific to the network, the pentest information obtained during the first autonomous pentest, where the pentest information includes an indication of the one or more first autonomous pentesting operations, attack path information associated with the first autonomous pentest, asset information associated with the set of multiple network assets, attribute data associated with a network asset of the set of multiple network assets, or any combination thereof. The memory reuse component 755 may be configured as or otherwise support a means for executing, after the first autonomous pentest, a second autonomous pentest on the network. To execute the second autonomous pentest, the memory reuse component 755 may be configured as or otherwise support a means for retrieving, from the encrypted database specific to the network, the pentest information associated with the first autonomous pentest and performing one or more second autonomous pentesting operations, where the one or more second autonomous pentesting operations are based on the pentest information associated with the first autonomous pentest retrieved from the encrypted database specific to the network.

The memory reuse component 755 may be configured as or otherwise support a means for performing one or more first autonomous pentesting operations during a first autonomous pentest on a network including a set of multiple network assets. The memory reuse component 755 may be configured as or otherwise support a means for obtaining, during the first autonomous pentest and based on the one or more first autonomous pentesting operations, pentest information associated with the first autonomous pentest on the network. The memory reuse component 755 may be configured as or otherwise support a means for storing, at an encrypted database specific to the network, the pentest information obtained during the first autonomous pentest, where the pentest information includes an indication of the one or more first autonomous pentesting operations, attack path information associated with the first autonomous pentest, asset information associated with the set of multiple network assets, attribute data associated with a network asset of the set of multiple network assets, or any combination thereof. The memory reuse component 755 may be configured as or otherwise support a means for performing one or more first pentesting operations during a first pentest on a network, where the one or more first pentesting operations are performed along an attack path between one or more first network assets of multiple network assets of the network; storing, at an encrypted database specific to the network, attack path information corresponding to the attack path of the first pentest, where the attack path information includes an indication of the one or more first pentesting operations, the one or more first network assets of the multiple network assets, or both; retrieving seed data from the encrypted database specific to the network, the seed data including at least a portion of the attack path information; and initiating, after the first pentest, a second pentest on the network, where an initial pentesting operation of the second pentest is in accordance with the seed data.

By including or configuring the memory reuse component 755 in accordance with examples as described herein, the agent device 705 may support techniques for improved network security.

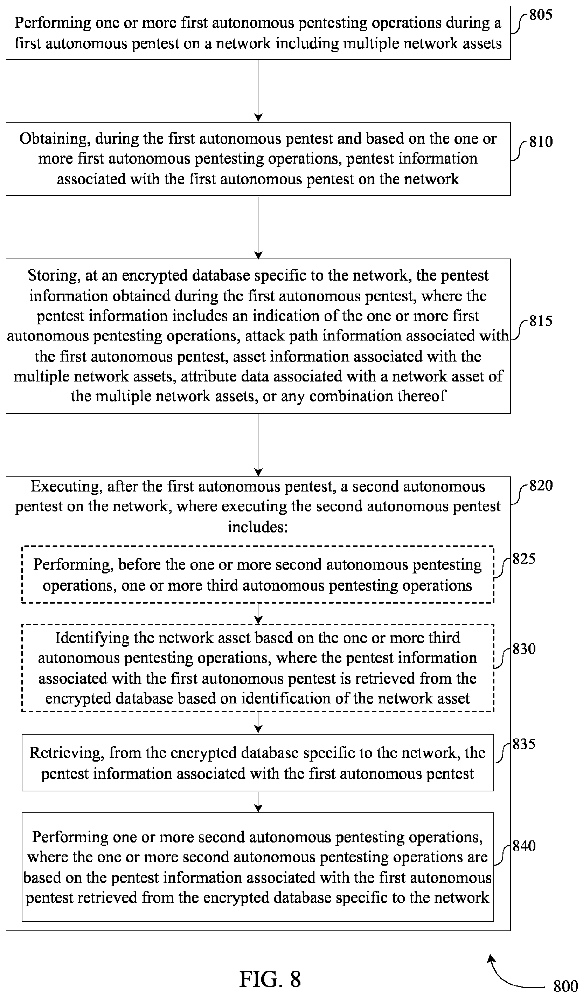

**FIG. 8** shows a flowchart illustrating a method 800 that supports network penetration testing memory reuse in accordance with aspects of the present disclosure. The operations of the method 800 may be implemented by an agent device 705 or its components as described herein. In some examples, an agent device may execute a set of instructions to control the functional elements of the agent device to perform the described functions. Additionally, or alternatively, the agent device may perform aspects of the described functions using special-purpose hardware.

At 805, the method 800 may include performing one or more first autonomous pentesting operations during a first autonomous pentest on a network including multiple network assets.

At 810, the method 800 may include obtaining, during the first autonomous pentest and based on the one or more first autonomous pentesting operations, pentest information associated with the first autonomous pentest on the network.

At 815, the method 800 may include storing, at an encrypted database specific to the network, the pentest information obtained during the first autonomous pentest, where the pentest information includes an indication of the one or more first autonomous pentesting operations, attack path information associated with the first autonomous pentest, asset information associated with the multiple network assets, attribute data associated with a network asset of the multiple network assets, or any combination thereof.

At 820, the method 800 may include executing, after the first autonomous pentest, a second autonomous pentest on the network. Executing the second autonomous pentest may include any of the operations at 825 through 840.

At 825, the method 800 may include performing, before the one or more second autonomous pentesting operations, one or more third autonomous pentesting operations.

At 830, the method 800 may include identifying the network asset based on the one or more third autonomous pentesting operations, where the pentest information associated with the first autonomous pentest is retrieved from the encrypted database based on identification of the network asset.

At 835, the method 800 may include retrieving, from the encrypted database specific to the network, the pentest information associated with the first autonomous pentest.

At 840, the method 800 may include performing one or more second autonomous pentesting operations, where the one or more second autonomous pentesting operations are based on the pentest information associated with the first autonomous pentest retrieved from the encrypted database specific to the network.

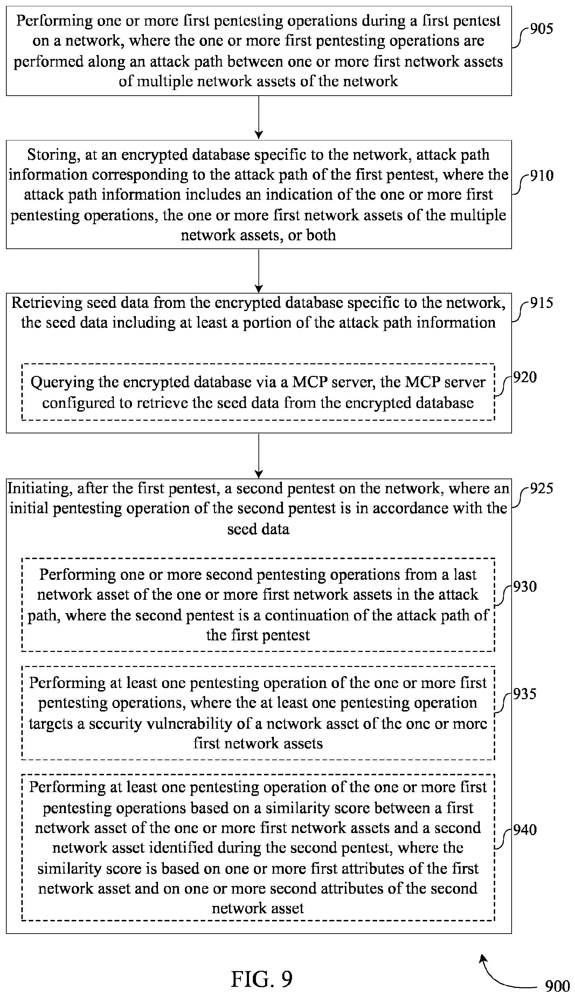

**FIG. 9** shows a flowchart illustrating a method 900 that supports network pentesting memory reuse in accordance with aspects of the present disclosure. The operations of the method 900 may be implemented by an agent device 705 or its components as described herein. In some examples, an agent device may execute a set of instructions to control the functional elements of the agent device to perform the described functions. Additionally, or alternatively, the agent device may perform aspects of the described functions using special-purpose hardware.

At 905, the method 900 may include performing one or more first pentesting operations during a first pentest on a network, where the one or more first pentesting operations are performed along an attack path between one or more first network assets of multiple network assets of the network.

At 910, the method 900 may include storing, at an encrypted database specific to the network, attack path information corresponding to the attack path of the first pentest, where the attack path information includes an indication of the one or more first pentesting operations, the one or more first network assets of the multiple network assets, or both.

At 915, the method 900 may include retrieving seed data from the encrypted database specific to the network, the seed data including at least a portion of the attack path information.

In some examples, at 920, retrieving the seed data may include querying the encrypted database via a MCP server, the MCP server configured to retrieve the seed data from the encrypted database.

At 925, the method may include initiating, after the first pentest, a second pentest on the network, where an initial pentesting operation of the second pentest is in accordance with the seed data.

In some examples, at 930, initiating the second pentest may include performing one or more second pentesting operations from a last network asset of the one or more first network assets in the attack path, where the second pentest is a continuation of the attack path of the first pentest.

In some examples, at 935, initiating the second pentest may include performing at least one pentesting operation of the one or more first pentesting operations, where the at least one pentesting operation targets a security vulnerability of a network asset of the one or more first network assets.

In some examples, at 940, initiating the second pentest may include performing at least one pentesting operation of the one or more first pentesting operations based on a similarity score between a first network asset of the one or more first network assets and a second network asset identified during the second pentest, where the similarity score is based on one or more first attributes of the first network asset and on one or more second attributes of the second network asset.

The following provides an overview of aspects of the present disclosure:
Aspect 1: A method of autonomous pentesting, comprising: performing one or more first autonomous pentesting operations during a first autonomous pentest on a network comprising a plurality of network assets; obtaining, during the first autonomous pentest and based at least in part on the one or more first autonomous pentesting operations, pentest information associated with the first autonomous pentest on the network; storing, at an encrypted database specific to the network, the pentest information obtained during the first autonomous pentest, wherein the pentest information comprises an indication of the one or more first autonomous pentesting operations, attack path information associated with the first autonomous pentest, asset information associated with the plurality of network assets, attribute data associated with a network asset of the plurality of network assets, or any combination thereof; and executing, after the first autonomous pentest, a second autonomous pentest on the network, wherein executing the second autonomous pentest comprises: retrieving, from the encrypted database specific to the network, the pentest information associated with the first autonomous pentest; and performing one or more second autonomous pentesting operations, wherein the one or more second autonomous pentesting operations are based at least in part on the pentest information associated with the first autonomous pentest retrieved from the encrypted database specific to the network.
Aspect 2: The method of aspect 1, wherein executing the second autonomous pentest comprises: performing, before the one or more second autonomous pentesting operations, one or more third autonomous pentesting operations; and identifying the network asset based at least in part on the one or more third autonomous pentesting operations, wherein the pentest information associated with the first autonomous pentest is retrieved from the encrypted database based at least in part on identification of the network asset.
Aspect 3: The method of aspect 2, further comprising: using at least a portion of the pentest information from the one or more first autonomous pentesting operations in the one or more second autonomous pentesting operations of the second autonomous pentest based at least in part on identification of the network asset.
Aspect 4. The method of any of aspects 2 through 3, further comprising: selecting the one or more second autonomous pentesting operations from a group of autonomous pentesting operations that is available to perform based at least in part on the pentest information and on identification of the network asset.
Aspect 5: The method of any of aspects 1 through 4, further comprising: performing, during the second autonomous pentest, a scan of the network comprising the plurality of network assets; identifying, based at least in part on the scan, a set of one or more second network assets at least partially different from a set of one or more first network assets identified during the first autonomous pentest; and performing, based at least in part on identification of the set of one or more second network assets, one or more third autonomous pentesting operations independently from the pentest information.
Aspect 6: The method of aspect 5, further comprising: obtaining, during the second autonomous pentest and based at least in part on the one or more third autonomous pentesting operations, second pentest information associated with the second autonomous pentest on the network; and storing, at the encrypted database specific to the network, the second pentest information obtained during the second autonomous pentest, wherein the second pentest information is associated with the one or more third autonomous pentesting operations.
Aspect 7: The method of any of aspects 1 through 6, further comprising: identifying, based at least in part on the pentest information in the encrypted database and on the one or more second autonomous pentesting operations, one or more patterns associated with the plurality of network assets, wherein the one or more patterns comprise one or more subdomain naming patterns, one or more credential patterns, one or more host naming patterns, one or more network configurations, or any combination thereof.
Aspect 8: The method of aspect 7, further comprising: associating the one or more patterns with a security risk in accordance with execution of the one or more first autonomous pentesting operations and the one or more second autonomous pentesting operations; determining, based at least in part on the security risk, a network security recommendation to break the one or more patterns; and outputting, to a user associated with the network, the network security recommendation.
Aspect 9: The method of any of aspects 1 through 8, further comprising: obtaining, for a duration of the second autonomous pentest, an encryption key used for encryption of the encrypted database; and accessing the encrypted database using the encryption key to obtain the pentest information associated with the first autonomous pentest based at least in part on the encryption key.
Aspect 10: The method of aspect 9, further comprising: retrieving, after the encrypted database is accessed using the encryption key, a second encryption key that encrypts at least a portion of the pentest information; and decrypting the portion of the pentest information using the second encryption key.
Aspect 11: The method of any of aspects 1 through 10, further comprising: executing, on a second network comprising a second plurality of network assets, a third autonomous pentest; and storing, at a second encrypted database specific to the second network, second pentest information obtained during the third autonomous pentest, wherein the second encrypted database specific to the second network is provisioned separately from the encrypted database specific to the network.
Aspect 12: The method of any of aspects 1 through 11, further comprising: generating, via an LLM, a candidate password list based at least in part on the pentest information, wherein the one or more second autonomous pentesting operations are based at least in part on the candidate password list.
Aspect 13: The method of any of aspects 1 through 12, further comprising: modifying one or more portions of the pentest information by anonymizing or removing PII.
Aspect 14: An apparatus for autonomous pentesting, comprising: one or more memories storing processor-executable code; and one or more processors coupled with the one or more memories and individually or collectively operable to execute the code to cause the apparatus to perform a method of any of aspects 1 through 13.
Aspect 15: A non-transitory computer-readable medium storing code for autonomous pentesting, the code comprising instructions executable by one or more processors to perform a method of any of aspects 1 through 13.
Aspect 16: An apparatus for autonomous pentesting, comprising at least one means for performing a method of any aspects 1 through 13.
Aspect 17: A method of pentesting, comprising: performing one or more first pentesting operations during a first pentest on a network, wherein the one or more first pentesting operations are performed along an attack path between one or more first network assets of a plurality of network assets of the network; storing, at an encrypted database specific to the network, attack path information corresponding to the attack path of the first pentest, wherein the attack path information comprises an indication of the one or more first pentesting operations, the one or more first network assets of the plurality of network assets, or both; retrieving seed data from the encrypted database specific to the network, the seed data comprising at least a portion of the attack path information; and initiating, after the first pentest, a second pentest on the network, wherein an initial pentesting operation of the second pentest is in accordance with the seed data.
Aspect 18: The method of aspect 17, wherein retrieving the seed data comprises: querying the encrypted database via a MCP server, the MCP server configured to retrieve the seed data from the encrypted database.
Aspect 19: The method of any of aspects 17 through 18, wherein initiating the second pentest comprises: performing one or more second pentesting operations from a last network asset of the one or more first network assets in the attack path, wherein the second pentest comprises a continuation of the attack path of the first pentest.
Aspect 20: The method of any of aspects 17 through 19, wherein initiating the second pentest comprises: performing at least one pentesting operation of the one or more first pentesting operations, wherein the at least one pentesting operation targets a security vulnerability of a network asset of the one or more first network assets.
Aspect 21: The method of aspect 20, further comprising: verifying that the security vulnerability is present at the network asset based at least in part on gaining unauthorized access to the network asset via the at least one pentesting operation.
Aspect 22: The method of aspect 20, further comprising: updating the encrypted database to remove the at least one pentesting operation from the attack path based at least in part on failing to gain unauthorized access to the network asset via the at least one pentesting operation.
Aspect 23: The method of any of aspects 17 through 22, wherein the second pentest comprises: performing at least one pentesting operation of the one or more first pentesting operations based at least in part on a similarity score between a first network asset of the one or more first network assets and a second network asset identified during the second pentest, wherein the similarity score is based at least in part on one or more first attributes of the first network asset and on one or more second attributes of the second network asset.
Aspect 24: The method of aspect 23, further comprising: querying the encrypted database using the one or more second attributes of the second network asset, wherein a response to the querying is indicative of the first network asset and the at least one pentesting operation.
Aspect 25: The method of any of aspects 17 through 24, further comprising: performing, during the second pentest, a scan of the network comprising the plurality of network assets; identifying, based at least in part on the scan, one or more second network assets at least partially different from the one or more first network assets identified during the first pentest; and performing, based at least in part on identification of the one or more second network assets, one or more second pentesting operations independently from the attack path information.
Aspect 26: The method of aspect 25, further comprising: obtaining, during the second pentest and based at least in part on the one or more second pentesting operations, second attack path information associated with the second pentest on the network; and storing, at the encrypted database specific to the network, the second attack path information obtained during the second pentest, wherein the second attack path information is associated with the one or more second pentesting operations.
Aspect 27: The method of any of aspects 17 through 26, further comprising: identifying, based at least in part on the attack path information in the encrypted database and on the second pentest, one or more patterns associated with the plurality of network assets, wherein the one or more patterns comprise one or more subdomain naming patterns, one or more credential patterns, one or more host naming patterns, one or more network configurations, or any combination thereof.
Aspect 28: The method of aspect 27, further comprising: associating the one or more patterns with a security risk in accordance with execution of the one or more first pentesting operations; determining, based at least in part on the security risk, a network security recommendation to break the one or more patterns; and outputting, to a user associated with the network, the network security recommendation.
Aspect 29: The method of any of aspects 17 through 28, further comprising: obtaining, for a duration of the second pentest, an encryption key used for encryption of the encrypted database; and accessing the encrypted database using the encryption key to obtain the attack path information associated with the first pentest.
Aspect 30: The method of aspect 29, further comprising: retrieving, after the encrypted database is accessed using the encryption key, a second encryption key that encrypts at least a portion of the attack path information; and decrypting the portion of the attack path information using the second encryption key.
Aspect 31: The method of any of aspects 17 through 30, further comprising: executing, on a second network comprising a second plurality of network assets, a third pentest; and storing, at a second encrypted database specific to the second network, second attack path information associated with the third pentest, wherein the second encrypted database specific to the second network is provisioned separately from the encrypted database specific to the network.
Aspect 32: The method of any of aspects 17 through 30, further comprising: generating, via an LLM, a candidate password list based at least in part on the attack path information, wherein the second pentest is initialized based at least in part on the candidate password list.
Aspect 33: The method of any of aspects 17 through 32, further comprising: modifying one or more portions of the attack path information by anonymizing or removing PII.
Aspect 34: An apparatus for pentesting, comprising: one or more memories storing processor-executable code; and one or more processors coupled with the one or more memories and individually or collectively operable to execute the code to cause the apparatus to perform a method of any of aspects 17 through 33.
Aspect 35: A non-transitory computer-readable medium storing code for pentesting, the code comprising instructions executable by one or more processors to perform a method of any of aspects 17 through 33.
Aspect 36: An apparatus for pentesting, comprising at least one means for performing a method of any aspects 17 through 33.

It should be noted that these methods describe examples of implementations, and that the operations and the steps may be rearranged or otherwise modified such that other implementations are possible. In some examples, aspects from two or more of the methods may be combined. For example, aspects of each of the methods may include steps or aspects of the other methods, or other steps or techniques described herein.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Information and signals described herein may be represented using any of a variety of different technologies and techniques. For example, data, instructions, commands, information, signals, bits, and symbols that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). The functions of each unit may also be implemented, in whole or in part, with instructions embodied in a memory, formatted to be executed by one or more general or application-specific processors.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable ROM (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

As used herein, including in the claims, the article "a" before a noun is openended and understood to refer to "at least one" of those nouns or "one or more" of those nouns. Thus, the terms "a," "at least one," "one or more," "at least one of one or more" may be interchangeable. For example, if a claim recites "a component" that performs one or more functions, each of the individual functions may be performed by a single component or by any combination of multiple components. Thus, the term "a component" having characteristics or performing functions may refer to "at least one of one or more components" having a particular characteristic or performing a particular function. Subsequent reference to a component introduced with the article "a" using the terms "the" or "said" may refer to any or all of the one or more components. For example, a component introduced with the article "a" may be understood to mean "one or more components," and referring to "the component" subsequently in the claims may be understood to be equivalent to referring to "at least one of the one or more components."

In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method (800) of autonomous pentesting, comprising:
performing (805) one or more first autonomous pentesting operations during a first autonomous pentest (410-a, 510-a, 610-a) on a network (110) comprising a plurality of network assets (120, 125, 130, 135, 140, 145, 150);
obtaining (810), during the first autonomous pentest (410-a, 510-a, 610-a) and based at least in part on the one or more first autonomous pentesting operations, pentest information (415-a) associated with the first autonomous pentest (410-a, 510-a, 610-a) on the network (110);
storing (815), at an encrypted database (405, 505, 605) specific to the network (110), the pentest information (415-a) obtained during the first autonomous pentest, wherein the pentest information (415-a) comprises an indication of the one or more first autonomous pentesting operations, attack path information associated with the first autonomous pentest (410-a, 510-a, 610-a), asset information associated with the plurality of network assets (120, 125, 130, 135, 140, 145, 150), attribute data associated with a network asset of the plurality of network assets (120, 125, 130, 135, 140, 145, 150), or any combination thereof; and
executing (820), after the first autonomous pentest (410-a, 510-a, 610-a), a second autonomous pentest (410-b, 510-b, 610-b) on the network (110), wherein executing (820) the second autonomous pentest (410-b, 510-b, 610-b) comprises:
retrieving (835), from the encrypted database (405, 505, 605) specific to the network (110), the pentest information (415-a) associated with the first autonomous pentest (410-a, 510-a, 610-a); and
performing (840) one or more second autonomous pentesting operations, wherein the one or more second autonomous pentesting operations are based at least in part on the pentest information (415-a) associated with the first autonomous pentest (410-a, 510-a, 610-a) retrieved from the encrypted database (405, 505, 605) specific to the network (110).

2. The method (800) of claim 1, wherein executing the second autonomous pentest (410-b, 510-b, 610-b) comprises:
performing (825), before the one or more second autonomous pentesting operations, one or more third autonomous pentesting operations; and
identifying (830) the network asset based at least in part on the one or more third autonomous pentesting operations, wherein the pentest information (415-a) associated with the first autonomous pentest (410-a, 510-a, 610-a) is retrieved from the encrypted database (405, 505, 605) based at least in part on identification of the network asset.

3. The method (800) of claim 2, further comprising:
using at least a portion of the pentest information (415-a) from the one or more first autonomous pentesting operations in the one or more second autonomous pentesting operations of the second autonomous pentest (410-b, 510-b, 610-b) based at least in part on identification of the network asset.

4. The method (800) of claim 2, further comprising:
selecting the one or more second autonomous pentesting operations from a group of autonomous pentesting operations that are available to perform based at least in part on the pentest information (415-a) and on identification of the network asset.

5. The method (800) of claim 1, further comprising:
performing, during the second autonomous pentest (410-b, 510-b, 610-b), a scan of the network (110) comprising the plurality of network assets (120, 125, 130, 135, 140, 145, 150);
identifying, based at least in part on the scan, a set of one or more second network assets at least partially different from a set of one or more first network assets identified during the first autonomous pentest (410-a, 510-a, 610-a); and
performing, based at least in part on identification of the set of one or more second network assets, one or more third autonomous pentesting operations independently from the pentest information (415-a).

6. The method (800) of claim 5, further comprising:
obtaining, during the second autonomous pentest (410-b, 510-b, 610-b) and based at least in part on the one or more third autonomous pentesting operations, second pentest information (415-b) associated with the second autonomous pentest (410-b, 510-b, 610-b) on the network (110); and
storing, at the encrypted database (405, 505, 605) specific to the network (110), the second pentest information (415-b) obtained during the second autonomous pentest (410-b, 510-b, 610-b), wherein the second pentest information (415-b) is associated with the one or more third autonomous pentesting operations.

7. The method (800) of claim 1, further comprising:
identifying, based at least in part on the pentest information (415-a) in the encrypted database (405, 505, 605) and on the one or more second autonomous pentesting operations, one or more patterns associated with the plurality of network assets (120, 125, 130, 135, 140, 145, 150), wherein the one or more patterns comprise one or more subdomain naming patterns, one or more credential patterns, one or more host naming patterns, one or more network configurations, or any combination thereof.

8. The method (800) of claim 7, further comprising:
associating the one or more patterns with a security risk in accordance with execution of the one or more first autonomous pentesting operations and the one or more second autonomous pentesting operations;
determining, based at least in part on the security risk, a network security recommendation to break the one or more patterns; and
outputting, to a user associated with the network (110), the network security recommendation.

9. The method (800) of claim 1, further comprising:
obtaining, for a duration of the second autonomous pentest (410-b, 510-b, 610-b), an encryption key (525) used for encryption of the encrypted database (405, 505, 605); and
accessing the encrypted database (405, 505, 605) using the encryption key (525) to obtain the pentest information (415-a) associated with the first autonomous pentest (410-a, 510-a, 610-a) based at least in part on the encryption key (525).

10. The method (800) of claim 9, further comprising:
retrieving, after the encrypted database (405, 505, 605) is accessed using the encryption key (525), a second encryption key that encrypts at least a portion of the pentest information; and
decrypting the portion of the pentest information using the second encryption key.

11. The method (800) of claim 1, further comprising:
executing, on a second network comprising a second plurality of network assets, a third autonomous pentest; and
storing, at a second encrypted database specific to the second network, second pentest information obtained during the third autonomous pentest, wherein the second encrypted database specific to the second network is provisioned separately from the encrypted database (405, 505, 605) specific to the network (110).

12. The method (800) of claim 1, further comprising:
generating, via a large language model (625), LLM, a candidate password list based at least in part on the pentest information (415-a), wherein the one or more second autonomous pentesting operations are based at least in part on the candidate password list.

13. The method (800) of claim 1, further comprising:
modifying one or more portions of the pentest information by anonymizing or removing personally identifiable information, PII.

14. An apparatus (705) for autonomous pentesting, comprising:
one or more memories (730) storing code; and
one or more processors (735) coupled with the one or more memories (730) and individually or collectively operable to execute the code to cause the apparatus (705) to:
perform (805) one or more first autonomous pentesting operations during a first autonomous pentest (410-a, 510-a, 610-a) on a network (110) comprising a plurality of network assets (120, 125, 130, 135, 140, 145, 150);
obtain (810), during the first autonomous pentest (410-a, 510-a, 610-a) and based at least in part on the one or more first autonomous pentesting operations, pentest information (415-a) associated with the first autonomous pentest (410-a, 510-a, 610-a) on the network (110);
store (815), at an encrypted database (405, 505, 605) specific to the network (110), the pentest information (415-a) obtained during the first autonomous pentest (410-a, 510-a, 610-a), wherein the pentest information (415-a) comprises an indication of the one or more first autonomous pentesting operations, attack path information associated with the first autonomous pentest (410-a, 510-a, 610-a), asset information associated with the plurality of network assets (120, 125, 130, 135, 140, 145, 150), attribute data associated with a network asset of the plurality of network assets (120, 125, 130, 135, 140, 145, 150), or any combination thereof; and
execute (820), after the first autonomous pentest (410-a, 510-a, 610-a), a second autonomous pentest (410-b, 510-b, 610-b) on the network (110), wherein, to execute the second autonomous pentest (410-b, 510-b, 610-b), the one or more processors (735) are individually or collectively further operable to execute the code to cause the apparatus (705) to:
retrieve (835), from the encrypted database (405, 505, 605) specific to the network (110), the pentest information (415-a) associated with the first autonomous pentest (410-a, 510-a, 610-a); and
perform (840) one or more second autonomous pentesting operations, wherein the one or more second autonomous pentesting operations are based at least in part on the pentest information (415-a) associated with the first autonomous pentest (410-a, 510-a, 610-a) retrieved from the encrypted database (405, 505, 605) specific to the network (110).

15. The apparatus (705) of claim 14, wherein, to execute the second autonomous pentest (410-b, 510-b, 610-b), the one or more processors (735) are individually or collectively further operable to execute the code to cause the apparatus (705) to:
perform (825), before the one or more second autonomous pentesting operations, one or more third autonomous pentesting operations; and
identify (830) the network asset based at least in part on the one or more third autonomous pentesting operations, wherein the pentest information (415-a) associated with the first autonomous pentest (410-a, 510-a, 610-a) is retrieved from the encrypted database (405, 505, 605) based at least in part on identification of the network asset.
